# EUROPEAN PATENT APPLICATION

(11) **EP 4 207 777 A1**
(43) Date of publication of application: **05.07.2023**
(21) Application number: 21865828.4
(22) Date of filing: 19.08.2021
(51) Int. Cl.: H04N 21/41

(54) **APPLICATION INTERFACE DISPLAY METHOD UNDER MULTI-WINDOW MIRRORING SCENARIO, AND ELECTRONIC DEVICE**

(30) Priority: 10.09.2020 CN 202010949157
(71) Applicant: Huawei Technologies Co., Ltd., Shenzhen, Guangdong 518129 (CN)
(72) Inventor: GAO, Kang, Shenzhen, Guangdong 518129 (CN)
(74) Representative: Huawei European IPR
(86) International application number: PCT/CN2021/113496
(87) International publication number: WO 2022/052772

(57) **Abstract**

An application interface display method in a multi-window projection scenario and an electronic device are disclosed, and relate to the field of electronic technologies, so that a projection interface is projected in an adapted state and an adapted size during multi-window projection, thereby improving user experience of projection. When projecting a screen to a second device, a first device re-updates an interface configuration parameter of a first application, and re-sends the updated interface configuration parameter of the first application to the second device based on a received screen rotation request used to initiate landscape/portrait orientation switching of a projection window (for example, a window of the first application), so that a first application interface is projected to the second device in an adaptation state (for example, landscape display or portrait display) and an adaptation size.

## Description

This application claims priority to Chinese Patent Application No. 202010949157.4, filed with the China National Intellectual Property Administration on September 10, 2020 and entitled "APPLICATION INTERFACE DISPLAY METHOD IN MULTI-WINDOW PROJECTION SCENARIO AND ELECTRONIC DEVICE", which is incorporated herein by reference in its entirety.

### TECHNICAL FIELD

Embodiments of this application relate to the field of electronic technologies, and in particular, to an application interface display method in a multi-window projection scenario and an electronic device.

### BACKGROUND

With development of application display technologies, more electronic devices support a multi-window projection technology. In the multi-window projection technology, a plurality of application interfaces running on an electronic device (for example, a first device) are projected onto another electronic device (for example, a second device).

Before the first device performs multi-window projection onto the second device, in response to a start operation performed by a user on an application on the first device (optionally, the start operation occurs on the first device or the second device), the first device optionally starts an application interface in a form of a free floating window. In addition, the first device transmits a video stream to the second device, to complete projection of the application interface onto the second device.

In some scenarios, an application, for example, a video playback application, provides landscape/portrait orientation switching, to cover an entire display area and provide better user experience. However, because a display range of the free floating window cannot cover the entire display area of the device, the electronic device generally cannot respond to a screen rotation request of the free floating window of the user. Therefore, interface presentation effect of a free floating window application after projection is affected. For example, a free floating window video application cannot be displayed in optimal landscape effect. In addition, even if the electronic device may respond to the screen rotation request of the free floating window of the user, a screen of the electronic device rotates only in one direction. Therefore, a plurality of free floating windows cannot rotate independently based on respective requirements but can rotate only in a same direction. Some applications (for example, a video application) have poor presentation effect in portrait display, and some applications (for example, WeChat^{®}) have poor presentation effect in landscape display. Therefore, based on the conventional multi-window projection technology, a display exception may occur in the application interface after projection (for example, interface shift and incomplete display of interface content), causing poor presentation effect.

### SUMMARY

Embodiments of this application provide an application interface display method in a multi-window projection scenario and an electronic device, so that when a multi-window projection is performed, a projection interface can be projected in an adapted state (for example, landscape display or portrait display) and an adapted size, thereby improving user experience of projection.

To achieve the foregoing objective, the following technical solutions are used in embodiments of this application.

According to a first aspect, an application interface display method in a multi-window projection scenario is provided. The method is applied to a scenario in which a first device performs projection onto a second device, and the method includes: The first device receives a screen rotation request used to initiate landscape/portrait orientation switching of a window of a first application. The first application is projected onto the second device by the first device. When determining that the first application supports window adjustment, the first device updates an interface configuration parameter of the first application based on a received screen rotation request. The first device sends, to the second device, first information that includes the interface configuration parameter of the first application. The first information is used to perform landscape/portrait orientation switching on the window of the first application of the second device.

According to the technical solution provided in the first aspect, the first device re-updates the interface configuration parameter of the first application based on the received screen rotation request used to initiate landscape/portrait orientation switching of the window of the first application, and re-sends an updated interface configuration parameter of the first application to the second device, so that a first application interface projected by the first device onto the second device can be displayed on the second device in the adapted state (for example, landscape display or portrait display) and the adapted size, thereby improving user experience of projection.

In a possible implementation, that the first device receives the screen rotation request of the user includes: The first device receives the screen rotation request of the user from the second device. The screen rotation request is determined by the second device based on a first operation of the user performed on the second device. In this application, the screen rotation request may be triggered by the user by performing an operation on the first application interface displayed on the second device in a process in which the first device projects the first application onto the second device.

In a possible implementation, that the first device receives the screen rotation request of the user includes: In response to receiving a second operation performed by the user on the first device, the first device determines that the screen rotation request of the user is received. In this application, the screen rotation request may be triggered by the user by performing the operation on the first application interface displayed on the first device in a process in which the first device projects the first application onto the second device.

In a possible implementation, that the first device updates the interface configuration parameter of the first application based on the received screen rotation request includes: the first device redetermines a window size of the first application based on the screen rotation request. The first device updates the interface configuration parameter of the first application based on a redetermined window size of the first application. In this application, the first device may redetermine the window size of the first application based on the screen rotation request, to update the interface configuration parameter of the first application based on the redetermined window size of the first application. According to this solution, the first application interface may be displayed on the second device in the adapted state (for example, landscape display or portrait display) and the adapted size based on a user operation.

In a possible implementation, that the first device updates the interface configuration parameter of the first application based on the redetermined window size of the first application includes: If the screen rotation request is used to switch the window of the first application from portrait display to landscape display, the first device adjusts the window size of the first application based on the screen rotation request so that a width of the window of the first application is greater than a height of the first application. If the screen rotation request is used to switch the window of the first application from landscape orientation display to portrait orientation display, the first device adjusts the window size of the first application based on the screen rotation request so that the width of the window of the first application is less than the height of the first application. According to this solution, the first application interface may be displayed on the second device in the adapted state (for example, landscape display or portrait display) and the adapted size based on the user operation.

In a possible implementation, that the first device updates the interface configuration parameter of the first application based on the redetermined window size of the first application includes: The first device obtains first configuration information based on the redetermined window size of the first application. The first configuration information is interface boundary information of the first application. The first device obtains second configuration information based on the interface boundary information of the first application. The second configuration information includes one or more of the following: an orientation of the first application, an icon displayed on a first application interface, a text displayed on the first application interface, a display position, size, and color of each icon displayed on the first application interface, and a display position, size, and color of each text displayed on the first application interface. The first device removes a process of the first application from screen configuration monitoring. The first device updates the first configuration information and the second configuration information to the interface configuration parameter of the first application. In this application, the first device may redetermine the window size of the first application based on the screen rotation request, to update the interface configuration parameter of the first application based on the redetermined window size of the first application. Specifically, the redetermined window size of the first application is used to determine the interface boundary information (namely, the first configuration information) of the first application in the interface configuration parameter. The first configuration information is used to determine the orientation of the first application, the icon displayed on the first application interface, the text displayed on the first application interface, the display position, size, and color of each icon displayed on the first application interface, and the display position, size and color of each text displayed on the first application interface in the interface configuration parameter. The process of the first application is removed from the screen configuration monitoring, to avoid landscape/portrait orientation switching of the window of the first application on the second device with rotation of a screen of the first device.

In a possible implementation, that the first device redetermines the window size of the first application based on the screen rotation request includes: The first device redetermines the window size of the first application based on an application development attribute and/or application data configuration of the first application based on the screen rotation request. The first device redetermines the window size of the first application based on the application development attribute and/or application data of the first application and a size of a display of the first device based on the screen rotation request. Alternatively, the first device redetermines the window size of the first application based on the application development attribute and/or application data of the first application and a size of a display of the second device based on the screen rotation request. In this application, the first device supports redetermining the window size of the first application based on the application development attribute and/or application data configuration, based on the size of the display of the first device, or based on the size of the display of the second device. In this way, the first application interface is displayed on the second device in the adapted state (for example, landscape display or portrait display) and the adapted size, thereby improving user experience of projection.

In a possible implementation, the method further includes: The first device determines an application category of the first application. If the application category of the first application is a first-type application, the first device redetermines the window size of the first application based on the size of the display of the second device based on the screen rotation request. If the application category of the first application is a second-type application, the first device redetermines the window size of the first application based on the size of the display of the first device based on the screen rotation request. The window size of the first application is determined based on the application category by referring to the size of the display of the first device or the size of the display of the second device so that the first application interface can be displayed on the second device in the adapted state (for example, landscape display or portrait display) and the adapted size, thereby improving user experience of projection.

In a possible implementation, the first-type application is a video-type application.

In a possible implementation, the first operation includes any one of the following: rotating a screen, tapping a virtual button, a preset touch gesture, or a preset operation or a voice instruction for actual hardware.

According to a second aspect, an electronic device is provided. The electronic device includes: a processing unit, configured to receive a screen rotation request used to initiate landscape/portrait orientation switching of a window of a first application, where the first application is projected onto a second device by a first device; and when it is determined that the first application supports window adjustment, update an interface configuration parameter of the first application based on the screen rotation request; and a transceiver unit, configured to send, to the second device, first information that includes the interface configuration parameter of the first application, where the first information is used to perform landscape/portrait orientation switching on the window of the first application of the second device.

According to the technical solution provided in the second aspect, the first device re-updates the interface configuration parameter of the first application based on a received screen rotation request used to initiate landscape/portrait orientation switching of the window of the first application, and re-sends an updated interface configuration parameter of the first application to the second device, so that the first application interface projected by the first device onto the second device can be displayed on the second device in an adapted state (for example, landscape display or portrait display) and an adapted size, thereby improving user experience of projection.

In a possible implementation, the processing unit is specifically configured to receive the screen rotation request that is from the second device and that is determined by the second device based on a first operation performed by the user on the second device. In this application, the screen rotation request may be triggered by the user by performing an operation on the first application interface displayed on the second device in a process in which the first device projects the first application onto the second device.

In a possible implementation, the processing unit is specifically configured to receive the screen rotation request that is from the first device and that is determined by a second operation performed by the user on the first device. In this application, the screen rotation request may be triggered by the user by performing the operation on the first application interface displayed on the first device in a process in which the first device projects the first application onto the second device.

In a possible implementation, that the processing unit updates the interface configuration parameter of the first application based on the received screen rotation request includes: The processing unit redetermines a window size of the first application based on the screen rotation request; and updates the interface configuration parameter of the first application based on a redetermined window size of the first application. In this application, the first device may redetermine the window size of the first application based on the screen rotation request, to update the interface configuration parameter of the first application based on the redetermined window size of the first application. According to this solution, the first application interface may be displayed on the second device in the adapted state (for example, landscape display or portrait display) and the adapted size based on a user operation.

In a possible implementation, that the processing unit updates the interface configuration parameter of the first application based on the redetermined window size of the first application includes: If the screen rotation request is used to switch the window of the first application from portrait display to landscape display, the processing unit adjusts the window size of the first application based on the screen rotation request so that a width of the window of the first application is greater than a height of the first application. If the screen rotation request is used to switch the window of the first application from landscape display to portrait display, the processing unit adjusts the window size of the first application based on the screen rotation request so that the width of the window of the first application is less than the height of the first application. According to this solution, the first application interface may be displayed on the second device in the adapted state (for example, landscape display or portrait display) and the adapted size based on the user operation.

In a possible implementation, that the processing unit updates the interface configuration parameter of the first application based on the redetermined window size of the first application includes: The processing unit obtains first configuration information based on the redetermined window size of the first application. The first configuration information is interface boundary information of the first application. The processing unit obtains second configuration information based on the interface boundary information of the first application. The second configuration information includes one or more of the following: an orientation of the first application, an icon displayed on the first application interface, a text displayed on the first application interface, a display position, size, and color of each icon displayed on the first application interface, and a display position, size, and color of each text displayed on the first application interface. The processing unit removes a process of the first application from screen configuration monitoring, and updates the first configuration information and the second configuration information to the interface configuration parameter of the first application. In this application, the first device may redetermine the window size of the first application based on the screen rotation request, to update the interface configuration parameter of the first application based on the redetermined window size of the first application. Specifically, the redetermined window size of the first application is used to determine the interface boundary information (namely, the first configuration information) of the first application in the interface configuration parameter. The first configuration information is used to determine the orientation of the first application, the icon displayed on the first application interface, the text displayed on the first application interface, the display position, size, and color of each icon displayed on the first application interface, and the display position, size, and color of each text displayed on the first application interface in the interface configuration parameter. The process of the first application is removed from the screen configuration monitoring, to avoid landscape/portrait orientation switching of a first application window on the second device with rotation of a screen of the first device.

In a possible implementation, that the processing unit determines the window size of the first application based on the screen rotation request includes: The processing unit redetermines the window size of the first application based on the application development attribute and/or application data configuration of the first application based on the screen rotation request; redetermines the window size of the first application based on the application development attribute and/or application data of the first application and the size of the display of the first device based on the screen rotation request; or redetermines the window size of the first application based on the application development attribute and/or application data of the first application and the size of the display of the second device based on the screen rotation request. In this application, the first device supports redetermining the window size of the first application based on the application development attribute and/or application data configuration, based on the size of the display of the first device, or based on the size of the display of the second device. In this way, the first application interface is displayed on the second device in the adapted state (for example, landscape display or portrait display) and the adapted size, thereby improving user experience of projection.

In a possible implementation, the processing unit is further configured to determine the application category of the first application. If the application category of the first application is a first-type application, the processing unit redetermines the window size of the first application based on the size of the display of the second device based on the screen rotation request. If the application category of the first application is a second-type application, the processing unit redetermines the window size of the first application based on the size of the display of the first device based on the screen rotation request. The window size of the first application is determined based on the application category by referring to the size of the display of the first device or the size of the display of the second device so that the first application interface can be displayed on the second device in the adapted state (for example, landscape display or portrait display) and the adapted size, thereby improving user experience of projection.

In a possible implementation, the first-type application is a video-type application.

In a possible implementation, the first operation includes any one of the following: rotating a screen, tapping a virtual button, a preset touch gesture, or a preset operation or a voice instruction for actual hardware.

According to a third aspect, an electronic device is provided. The electronic device includes: a memory, configured to store a computer program; a transceiver, configured to receive or transmit a radio signal; and a processor, configured to: execute the computer program so that the electronic device receives a screen rotation request used to initiate landscape/portrait orientation switching of a window of a first application, where the first application is projected onto a second device by a first device; and when determining that the first application supports window adjustment, update an interface configuration parameter of the first application based on a received screen rotation request; and send, to the second device, first information that includes the interface configuration parameter of the first application, where the first information is used to perform landscape/portrait orientation switching on the window of the first application of the second device.

According to the technical solution provided in the third aspect, the first device re-updates the interface configuration parameter of the first application based on the received screen rotation request used to initiate landscape/portrait orientation switching of the window of the first application and re-sends an updated interface configuration parameter of the first application to the second device, so that the first application interface projected by the first device onto the second device can be displayed on the second device in an adapted state (for example, landscape display or portrait display) and an adapted size, thereby improving user experience of projection.

In a possible implementation, the processor is specifically configured to receive the screen rotation request that is from the second device and that is determined by the second device based on a first operation performed by the user on the second device. In this application, the screen rotation request may be triggered by the user by performing an operation on the first application interface displayed on the second device in a process in which the first device projects the first application onto the second device.

In a possible implementation, the processor is specifically configured to receive the screen rotation request that is from the first device and that is determined by a second operation performed by the user on the first device. In this application, the screen rotation request may be triggered by the user by performing the operation on the first application interface displayed on the first device in a process in which the first device projects the first application onto the second device.

In a possible implementation, that the processor updates the interface configuration parameter of the first application based on the received screen rotation request includes: The processor redetermines a window size of the first application based on the screen rotation request, and updates the interface configuration parameter of the first application based on a redetermined window size of the first application. In this application, the first device may redetermine the window size of the first application based on the screen rotation request, to update the interface configuration parameter of the first application based on the redetermined window size of the first application. According to this solution, the first application interface may be displayed on the second device in the adapted state (for example, landscape display or portrait display) and the adapted size based on a user operation.

In a possible implementation, that the processor updates the interface configuration parameter of the first application based on the redetermined window size of the first application includes: If the screen rotation request is used to switch the window of the first application from portrait display to landscape display, the processor adjusts the window size of the first application based on the screen rotation request so that a width of the window of the first application is greater than a height of the first application. If the screen rotation request is used to switch the window of the first application from landscape display to portrait display, the processor adjusts the window size of the first application based on the screen rotation request so that the width of the window of the first application is less than the height of the first application. According to this solution, the first application interface may be displayed on the second device in the adapted state (for example, landscape display or portrait display) and the adapted size based on the user operation.

In a possible implementation, that the processor updates the interface configuration parameter of the first application based on the redetermined window size of the first application includes: The processor obtains first configuration information based on the redetermined window size of the first application. The first configuration information is interface boundary information of the first application. The processor obtains second configuration information based on the interface boundary information of the first application. The second configuration information includes one or more of the following: an orientation of the first application, an icon displayed on the first application interface, a text displayed on the first application interface, a display position, size, and color of each icon displayed on the first application interface, and the display position, size, and color of each text displayed on the first application interface. The processor removes a process of the first application from screen configuration monitoring, and updates the first configuration information and the second configuration information to the interface configuration parameter of the first application. In this application, the first device may redetermine the window size of the first application based on the screen rotation request, to update the interface configuration parameter of the first application based on the redetermined window size of the first application. Specifically, the redetermined window size of the first application is used to determine the interface boundary information (namely, the first configuration information) of the first application in the interface configuration parameter. The first configuration information is used to determine the orientation of the first application, the icon displayed on the first application interface, the text displayed on the first application interface, the display position, size, and color of each icon displayed on the first application interface, and the display position, size, and color of each text displayed on the first application interface in the interface configuration parameter. The process of the first application is removed from the screen configuration monitoring, to avoid landscape/portrait orientation switching of a first application window on the second device with rotation of a screen of the first device.

In a possible implementation, that the processor redetermines the window size of the first application based on the screen rotation request includes: The processor redetermines the window size of the first application based on an application development attribute and/or application data configuration of the first application based on the screen rotation request; redetermines the window size of the first application based on the application development attribute and/or application data of the first application and a size of a display of the first device based on the screen rotation request; or redetermines the window size of the first application based on the application development attribute and/or application data of the first application and a size of a display of the second device based on the screen rotation request. In this application, the first device supports redetermining the window size of the first application based on the application development attribute and/or application data configuration, based on the size of the display of the first device, or based on the size of the display of the second device. In this way, the first application interface is displayed on the second device in the adapted state (for example, landscape display or portrait display) and the adapted size, thereby improving user experience of projection.

In a possible implementation, the processor is further configured to execute the computer program so that the electronic device determines an application category of the first application. If the application category of the first application is a first-type application, the processor redetermines the window size of the first application based on the size of the display of the second device based on the screen rotation request. If the application category of the first application is a second-type application, the processor redetermines the window size of the first application based on the size of the display of the first device based on the screen rotation request. The window size of the first application is determined based on the application category by referring to the size of the display of the first device or the size of the display of the second device so that the first application interface can be displayed on the second device in the adapted state (for example, landscape display or portrait display) and the adapted size, thereby improving user experience of projection.

In a possible implementation, the first-type application is a video-type application.

In a possible implementation, the first operation includes any one of the following: rotating a screen, tapping a virtual button, a preset touch gesture, or a preset operation or a voice instruction for actual hardware.

According to a fourth aspect, a computer-readable storage medium is provided. The computer-readable storage medium stores a computer program code, and when the computer program code is executed by a processor, the method in any possible implementation of the first aspect is performed.

According to a fifth aspect, a chip system is provided. The chip system includes a processor and a memory, where the memory stores a computer program code, and when the computer program code is executed by the processor, the method in any possible implementation of the first aspect is performed. The chip system may include a chip, or may include a chip and another discrete component.

According to a sixth aspect, a computer program product is provided. When the computer program product runs on a computer, the method in any possible implementation of the first aspect is performed.

### BRIEF DESCRIPTION OF DRAWINGS

FIG. 1A and FIG. 1B are a schematic diagram of an example of a multi-screen collaboration scenario according to an embodiment of this application;
FIG. 2 is a schematic diagram of a hardware structure of a first device according to an embodiment of this application;
FIG. 3 is a schematic diagram of a hardware structure of a second device according to an embodiment of this application;
FIG. 4 is a schematic diagram of a process of application interface display in a multi-window projection scenario according to an embodiment of this application;
FIG. 5 is a schematic diagram of same-source projection according to an embodiment of this application;
FIG. 6 is a schematic diagram of different-source projection according to an embodiment of this application;
FIG. 7 is a flowchart of an application interface display method in a multi-window projection scenario according to an embodiment of this application;
FIG. 8 is a schematic diagram of an example of three types of first operations of a user according to an embodiment of this application;
FIG. 9 is a specific flowchart of an interface configuration parameter of a first application updated by a mobile phone according to an embodiment of this application;
FIG. 10A, FIG. 10B, FIG. 10C, and FIG. 10D are a schematic diagram 1 of an example of application interface display effect in a projection scenario according to an embodiment of this application;
FIG. 11 is a flowchart of another application interface display method in a multi-window projection scenario according to an embodiment of this application;
FIG. 12A, FIG. 12B, FIG. 12C, and FIG. 12D are a schematic diagram 2 of an example of application interface display effect in a projection scenario according to an embodiment of this application;
FIG. 13A, FIG. 13B, FIG. 13C, and FIG. 13D are a schematic diagram 3 of an example of application interface display effect in a projection scenario according to an embodiment of this application;
FIG. 14A, FIG. 14B, FIG. 14C, and FIG. 14D are a schematic diagram 4 of an example of application interface display effect in a projection scenario according to an embodiment of this application;
FIG. 15 is a schematic diagram of a projection interface jointly rendered by a first device on a virtual screen according to an embodiment of this application;
FIG. 16 is a block diagram of a structure of an electronic device according to an embodiment of this application;
FIG. 17 is a block diagram of a structure of another electronic device according to an embodiment of this application; and
FIG. 18 is a schematic diagram of a structure of an electronic device according to an embodiment of this application.

### DESCRIPTION OF EMBODIMENTS

The following describes technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly indicate or implicitly include one or more such features. In the descriptions of embodiments, unless otherwise specified, "a plurality of" means two or more.

Embodiments of this application provide an application interface display method in a multi-window projection scenario. The method is applied to a multi-screen collaboration (multi-Screen collaboration) process. Multi-screen collaboration is a function of establishing communication connection between devices (for example, a first device and a second device), to implement cross-device and cross-system multi-screen collaboration interaction.

For example, after the first device establishes communication connection used for multi-screen collaboration with the second device, one or more application interfaces started on the first device may be synchronously displayed on the second device. A user may perform operations on the one or more application interfaces by using hardware (for example, a keyboard, a mouse, a microphone, and a speaker) of the second device. In addition, the user may open a new application interface by using the first device, to further synchronize the application interface to the second device. In addition, the user may further complete, on the second device, a function such as fast data sharing with the first device.

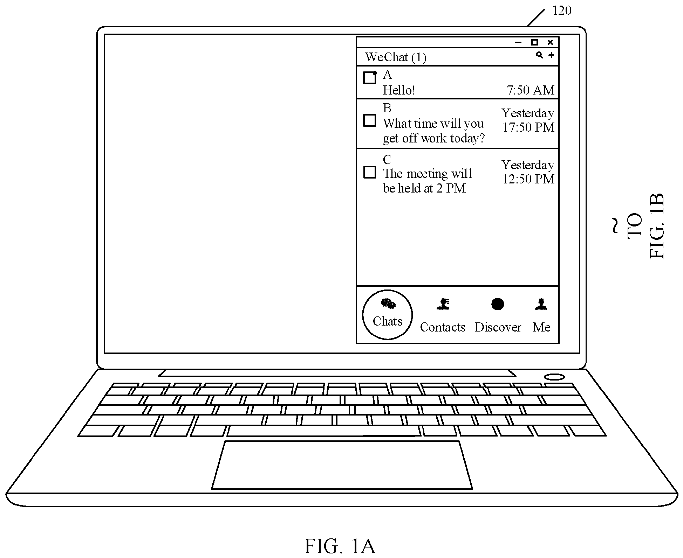

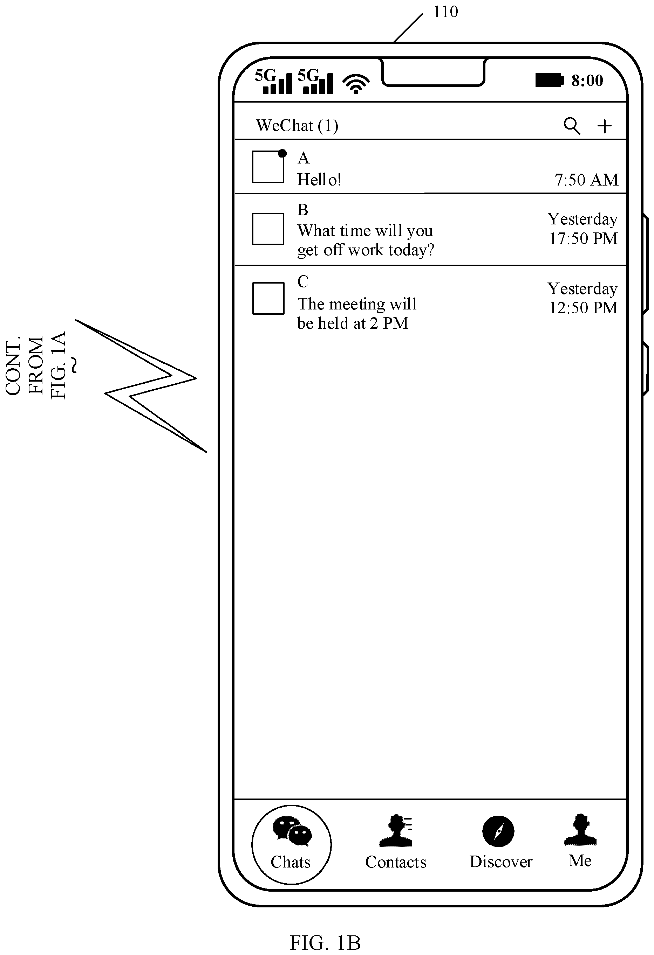

FIG. 1A and FIG. 1B are a schematic diagram of an example of a multi-screen collaboration scenario. As shown in FIG. 1A and FIG. 1B, it is assumed that communication connection used for multi-screen collaboration is established between a smartphone 110 (namely, a first device) and a notebook computer 120 (namely, a second device). After communication connection is established between the smartphone 110 and the notebook computer 120, as shown in FIG. 1A and FIG. 1B, a WeChat^{®} chat interface displayed on the smartphone 110 is synchronously displayed on the notebook computer 120. The user may operate on the WeChat^{®} chat interface by using the smartphone 110 or the notebook computer 120.

Multi-screen collaboration provides convenient user experience. For example, because a size of a display of the notebook computer 120 is usually greater than a size of a display of the smartphone 110, user viewing experience can be improved. For another example, a mouse of the notebook computer 120 can serve as a finger of the user to enable more precise touch operations on the WeChat^{®} chat interface. For still another example, a large-sized physical keyboard of the notebook computer 120 may replace a small-sized virtual input method window on the display of the smartphone 110, thereby implementing better text input experience. For yet another example, a multi-channel stereo speaker of the notebook computer 120 may replace the speaker of the smartphone 110, and output audio (for example, a voice message from the WeChat ^{®} chat interface, and a music file being played on the smartphone 110) from the smartphone 110, to improve volume and sound quality.

In this embodiment of this application, wireless communication connection may be established between a first device and a second device through "touching", "scanning" (for example, scanning a QR code or a bar code), or "automatic discovery when approaching" (for example, through Bluetooth or wireless fidelity (wireless fidelity, Wi-Fi)). The first device and the second device may transmit information by using a wireless connection transceiver according to a wireless transmission protocol. The wireless transmission protocol may include but is not limited to a Bluetooth (Bluetooth, BT) transmission protocol, a wireless fidelity (wireless fidelity, Wi-Fi) transmission protocol, or the like. For example, the Wi-Fi transmission protocol may be a Wi-Fi P2P transmission protocol. The wireless connection transceiver includes but is not limited to transceivers such as Bluetooth and Wi-Fi. Information transmission between the first device and the second device is implemented through wireless pairing. Information transmitted between the first device and the second device includes but is not limited to content data (for example, a standard video stream) that needs to be displayed, control instructions, and the like.

Alternatively, wired communication connection may be established between the first device and the second device. For example, wired communication connection is established between the first device and the second device by using a video graphics array (video graphics array, VGA), a digital visual interface (digital visual interface, DVI), a high definition multimedia interface (high definition multimedia interface, HDMI), a data transmission line, or the like. Information transmission is implemented between the first device and the second device through established wired communication connection. A specific connection manner between the first device and the second device is not limited in this application.

In an application interface display method in a multi-window projection scenario provided in this embodiment of this application, for example, after communication connection used for multi-screen collaboration is established between the first device and the second device, it is assumed that in response to a start operation of a user for one or more applications on the first device, the first device projects one or more application interfaces in a form of a free floating window onto the second device. In some embodiments, when starting a free floating window application, the first device renders a free floating window application interface to a virtual display (virtual display). Then, a surface corresponding to the virtual display is encoded into a standard video stream, and the standard video stream is transmitted to the second device, to complete multi-window multi-screen collaboration on the first device and the second device. Based on multi-window multi-screen collaboration on the first device and the second device, the user may cooperatively control, by using the first device and the second device, the one or more application interfaces started by the first device.

In this embodiment of this application, both a first device and a second device include a display. The first device and the second device may include but are not limited to a smartphone, a netbook, a tablet computer, a smart watch, a smart band, a telephone watch, a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a television, a projection device, or a somatic game console in a human-computer interaction scenario. Alternatively, the first device and the second device may be electronic devices of another type or structure, which is not limited in this application.

Generally, to give full play to a maximum advantage of a multi-window projection technology, multi-window projection may be applied between a portable device (namely, the first device) and a large-screen device (namely, the second device). For example, the portable device is a smartphone, and the large-screen device is a notebook computer. For another example, the portable device is a tablet computer, and the large-screen device is a television. Certainly, a specific device in a multi-screen collaboration scenario is not limited in this application. As described above, the first device and the second device may be electronic devices that support multi-screen collaboration, for example, a smartphone, a netbook, a tablet computer, a smart watch, a smart band, a telephone watch, a smart camera, a palmtop computer, a PDA, a PMP, or an AR/VR device, or a television.

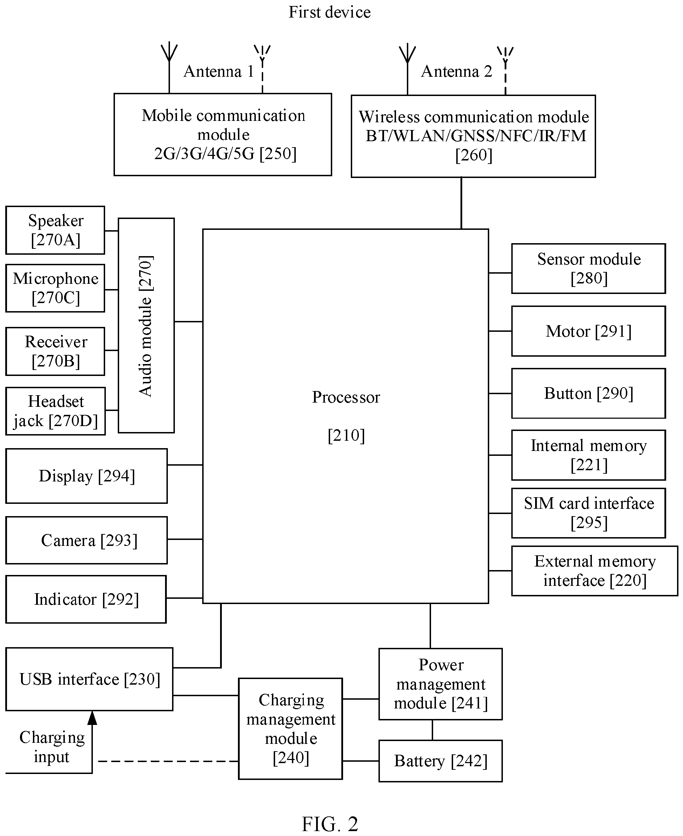

FIG. 2 is a schematic diagram of a hardware structure of the first device according to an embodiment of this application by using a smartphone as an example. As shown in FIG. 2, the first device may include a processor 210, an memory (including an external memory interface 220 and an internal memory 221), a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

It may be understood that a structure shown in this embodiment of this application does not constitute a specific limitation on the first device. In some other embodiments of this application, the first device may include more or fewer components than those shown in the figure, or some components may be combined, or some components may be split, or there may be different component layout. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210. Therefore, system efficiency is improved.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 240 is configured to receive a charging input from a charger. The charger may be a wireless charger or a wired charger. In some embodiments of wired charging, the charging management module 240 may receive the charging input of the wired charger through the USB interface 230. In some embodiments of wireless charging, the charging management module 240 may receive a wireless charging input through a wireless charging coil of the first device. The charging management module 240 may further supply power to the first device by using the power management module 241 while charging the battery 242.

The power management module 241 is configured to connect the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a quantity of battery cycles, and a battery health status (electric leakage and impedance). In some other embodiments, the power management module 241 may alternatively be disposed in the processor 210. In some other embodiments, the power management module 241 and the charging management module 240 may alternatively be disposed in a same device.

A wireless communication function of the first device may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the first device may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be configured in combination with a tuning switch.

The mobile communication module 250 may provide a wireless communication solution that is applied to the first device, including 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on a received electromagnetic wave, and transmit the electromagnetic wave to the modem processor for demodulation. The mobile communication module 250 may further amplify a signal modulated by the modem processor, and convert the signal into the electromagnetic wave for radiation through the antenna 1. In some embodiments, at least some functional modules in the mobile communication module 250 may be disposed in the processor 210. In some embodiments, the at least some functional modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers it to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same component as the mobile communication module 250 or another functional module.

The wireless communication module 260 may provide a wireless communication solution applied to the first device, for example a wireless local area network (wireless local area network, WLAN) (for example a Wi-Fi network), Bluetooth BT, a global navigation satellite system (global navigation satellite system, GNSS), frequency modulation (frequency modulation, FM), a near field communication (near field communication, NFC) technology, and an infrared (infrared, IR) technology. The wireless communication module 260 may be one or more components integrating at least one communication processing module. The wireless communication module 260 receives the electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into the electromagnetic wave for radiation through the antenna 2.

In some embodiments, the antenna 1 of the first device is coupled to the mobile communication module 250, and the antenna 2 is coupled to the wireless communication module 260, so that the first device can communicate with a network and another device by using a wireless communication technology. The wireless communication technology may include global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first device implements a display function by using the GPU, the display 294, the application processor, and the like. The GPU is a microprocessor for image processing, and is connected to the display 294 and the application processor. The GPU is configured to perform mathematical and geometric calculations, and render an image. The processor 210 may include one or more GPUs that execute program instructions to generate or change display information.

The display 294 is configured to display the image, the video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, quantum dot light emitting diodes (quantum dot light emitting diodes, QLED), or the like. In some embodiments, the first device may include one or N displays 294, where N is a positive integer greater than 1.

The first device can implement a photographing function by using the ISP, the camera 293, the video codec, the GPU, the display 294, the application processor, and the like.

The external memory interface 220 may be configured to connect to an external memory card, for example, a Micro SD card, to extend a storage capability of the first device. The external memory card communicates with the processor 210 through the external memory interface 220, to implement a data storage function. For example, files such as music and video are stored in the external memory card.

The internal memory 221 may be configured to store a computer-executable program code. The executable program code includes instructions. The internal memory 221 may include a program storage area and a data storage area. The program storage area may store an operating system, an application required by at least one function (for example, a sound playing function or an image playing function), and the like. The data storage area may store data (for example, audio data and an address book) created in a process of using the first device. In addition, the internal memory 221 may include a high-speed random access memory, and may further include a nonvolatile memory, for example, at least one magnetic disk storage device, a flash memory, or a universal flash storage (universal flash storage, UFS). The processor 210 runs instructions stored in the internal memory 221 and/or instructions stored in the memory disposed in the processor, to perform various function applications and data processing of the first device.

The first device may implement an audio function by using the audio module 270, the loudspeaker 270A, the receiver 270B, the microphone 270C, the application processor, and the like. For example, music playing, recording and the like. For specific working principles and functions of the audio module 270, the loudspeaker 270A, the receiver 270B, and the microphone 270C, refer to descriptions in the conventional technology.

The button 290 includes a power button, a volume button, or the like. The button 290 may be a mechanical button, or a touch button. The first device may receive a key input, and generate a key signal input related to a user setting and function control of the first device.

The motor 291 may generate a vibration prompt. The motor 291 may be configured to provide an incoming call vibration prompt and a touch vibration feedback. For example, touch operations performed on different applications (for example, photographing and audio play) may correspond to different vibration feedback effects. The motor 291 may also generate different vibration feedback effects for touch operations performed on different areas of the display 294. Different application scenarios (for example, a time reminder, information receiving, an alarm clock, and a game) may also correspond to different vibration feedback effects. A touch vibration feedback effect may be further customized.

The indicator 292 may be an indicator light, and may be configured to indicate a charging status and a power change, or may be configured to indicate a message, a missed call, a notification, or the like.

A SIM card interface 295 is configured to connect to a SIM card. The SIM card may be inserted into the SIM card interface 295 or removed from the SIM card interface 295 to implement contact with and separation from the first device. The first device may support one or N SIM card interfaces, where N is a positive integer greater than 1. The SIM card interface 295 may support a Nano SIM card, a Micro SIM card, a SIM card, and the like. A plurality of cards may be simultaneously inserted into a same SIM card interface 295. The plurality of cards may be of a same type or of different types. The SIM card interface 295 may also be compatible with different types of SIM cards. The SIM card interface 295 may also be compatible with the external memory card. The first device interacts with a network by using the SIM card, to implement functions such as conversation and data communication. In some embodiments, the first device uses an eSIM, namely, an embedded SIM card. An eSIM card may be embedded in the first device, and cannot be separated from the first device.

It should be noted that the hardware modules included in the first device shown in FIG. 2 are merely described as examples, and a specific structure of the first device is not limited. For example, the first device may further include another functional module.

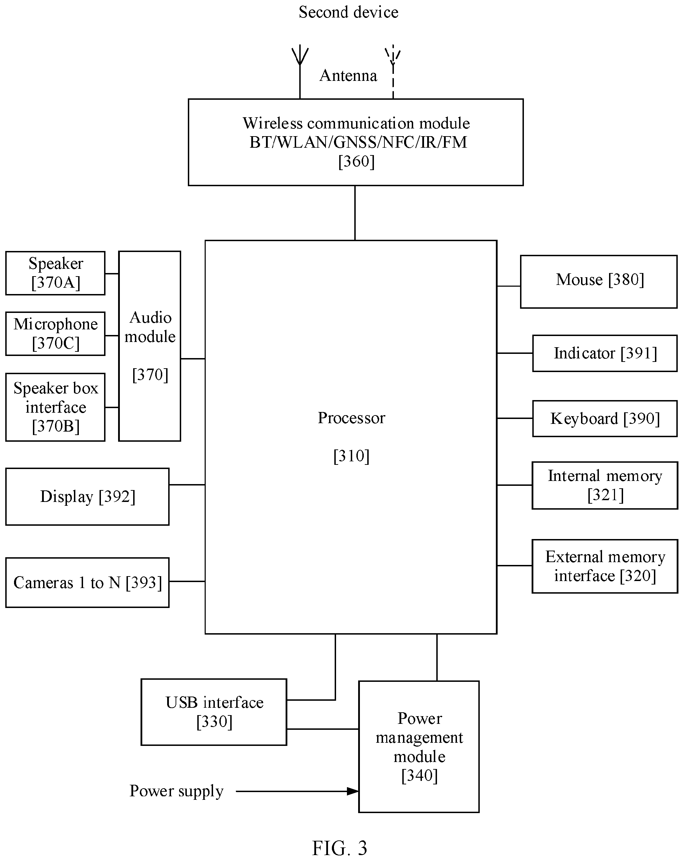

As an example, FIG. 3 shows a schematic diagram of a hardware structure of the second device by using an example in which the second device is a notebook computer. As shown in FIG. 3, the notebook computer may include a processor 310, an external memory interface 320, an internal memory 321, a USB interface 330, a power management module 340, an antenna, a wireless communication module 360, an audio module 370, a speaker 370A, a microphone 370C, a speaker box interface 370B, a mouse 380, a keyboard 390, an indicator 391, a camera 393, a display 392, and the like.

It may be understood that the structure shown in this embodiment does not constitute a specific limitation on the notebook computer. In some other embodiments, the notebook computer may include more or fewer components than those shown in the figure, or some components may be combined, or some components may be split, or there may be different component layout. The components shown in the figure may be implemented by using hardware, software, or a combination of software and hardware.

The processor 310 may include one or more processing units. For example, the processor 310 may include an application processor AP, a modem processor, a graphics processing unit GPU, an ISP, a controller, a memory, a video codec, a DSP, a baseband processor, and/or an NPU. Different processing units may be independent devices, or may be integrated into the one or more processors.

The controller can be a nerve center and command center of the notebook computer. The controller may complete instruction fetching according to instructions, generate an operation control signal, and further control the instructions.

The memory may be further disposed in the processor 310, and is configured to store instructions and data. In some embodiments, the memory in the processor 310 is the cache. The memory may store instructions or data just used or cyclically used by the processor 310. If the processor 310 needs to use the instructions or the data again, the processor 310 may directly invoke the instructions or the data from the memory. This avoids repeated access and reduces waiting time of the processor 310. Therefore, system efficiency is improved. In some embodiments, the processor 310 may include one or more interfaces. The interface may include an integrated circuit I2C interface, an integrated circuit built-in audio I2S interface, a PCM interface, a UART interface, an MIPI interface, a GPIO interface, and/or a USB interface.

It may be understood that an interface connection relationship between the modules shown in this embodiment is merely an example for description, and does not constitute a limitation on the structure of the notebook computer. In some other embodiments, the notebook computer may alternatively use different interface connection manners in the foregoing embodiments, or a combination of a plurality of interface connection manners.

The power management module 340 is configured to connect to a power supply. The charging management module 340 may be further connected to the processor 310, the internal memory 321, the display 394, the camera 393, the wireless communication module 360, and the like. The power management module 341 receives the input of the power supply, and supplies power to the processor 310, the internal memory 321, the display 394, the camera 393, the wireless communication module 360, and the like. In some embodiments, the power management module 341 may alternatively be disposed in the processor 310.

A wireless communication function of the notebook computer may be implemented by using the antenna, the wireless communication module 360, and the like. The wireless communication module 360 may provide a wireless communication solution that is applied to the notebook computer, including a wireless local area network WLAN (for example, a Wi-Fi network), Bluetooth BT, a global navigation satellite system GNSS, frequency modulation FM, a near field wireless communication technology NFC, and an infrared technology IR.

The wireless communication module 360 may be the one or more components integrating the at least one communication processing module. The wireless communication module 360 receives an electromagnetic wave through the antenna 2, performs frequency modulation and filtering processing on the electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2. In some embodiments, the antenna of the notebook computer is coupled to the wireless communication module 360 so that the notebook computer can communicate with the network and the another device by using the wireless communication technology.

The notebook computer implements a display function by using the GPU, the display 392, the application processor, and the like. The GPU is the microprocessor for image processing, and is connected to the display 392 and the application processor. The GPU is configured to perform mathematical and geometric calculations, and render the image. The processor 310 may include the one or more GPUs that execute program instructions to generate or change display information. The display 392 is configured to display the image, the video, and the like. The display 392 includes the display panel.

The notebook computer may implement the photographing function by using the ISP, the camera 393, the video codec, the GPU, the display 392, the application processor, and the like. The ISP is configured to process data fed back by the camera 393. In some embodiments, the ISP may be disposed in the camera 393.

The digital signal processor is configured to process a digital signal, and may process another digital signal in addition to a digital image signal. For example, when the notebook computer selects a frequency, the digital signal processor is configured to perform Fourier transform on the frequency energy and the like. The video codec is configured to compress or decompress a digital video. The notebook computer can support one or more video codecs. In this way, the notebook computer may play or record videos in a plurality of encoding formats, for example, a moving picture experts group (moving picture experts group, MPEG) 1, an MPEG 2, an MPEG 3, and an MPEG 4.

The external memory interface 320 may be configured to connect the external memory card, for example, the Micro SD card, to expand the storage capability of the notebook computer. The external memory card communicates with the processor 310 through the external memory interface 320, to implement the data storage function. For example, files such as music and video are stored in the external memory card.

The internal memory 321 may be configured to store the computer-executable program code. The executable program code includes instructions. The processor 310 executes various functional applications of the notebook computer and data processing by running the instructions stored in the internal memory 321. For example, in this embodiment of this application, the processor 310 may execute the instructions stored in the internal memory 321. The internal memory 321 may include a program storage area and a data storage area.

The program storage area may store an operating system, an application required by at least one function (for example, a sound playing function or an image playing function), and the like. The data storage area may store data (for example, audio data and an address book) created in a process of using the notebook computer. In addition, the internal memory 321 may include a high-speed random access memory, and may further include a nonvolatile memory, for example, at least one magnetic disk storage device, a flash memory, or a universal flash storage (universal flash storage, UFS).

The notebook computer may implement the audio function, for example, music playing, recording, and the like, by using the audio module 370, the speaker 370A, the microphone 370C, the speaker box interface 370B, the application processor, and the like.

The indicator 391 may be indicator light, and may be configured to indicate that the notebook computer is in a power-on state, a power-off state, or the like. For example, that the indicator light is off indicates that the notebook computer is in a power-off state. That the indicator light is on indicates that the notebook computer is in a power-on state.

It may be understood that the structure shown in this embodiment of this application does not constitute a specific limitation on the notebook computer. The notebook computer may have more or fewer components than those shown in FIG. 3, may combine two or more components, or may have different component configuration. For example, the notebook computer may further include a component such as a sound box. The components shown in FIG. 3 may be implemented in hardware, software, or a combination of hardware and software including one or more signal processors or specific integrated circuits.

The following embodiments of this application are described by using an example in which information transmission is implemented between the first device and the second device in compliance with the wireless transmission protocol.

Embodiments of this application provide an application interface display method in a multi-window projection scenario. The method is used to provide a technical solution in which interfaces of one or more applications running on a first device are projected onto a display of a second device in an adapted state (for example, landscape display or portrait display) and an adapted size, thereby improving user experience of projection.

Landscape display means that an aspect ratio (namely, a ratio of a width to a height) of an application window is greater than 1, for example, 16:9, 18:9, 20:9, or 16: 10. The height of the application window may also be understood as a vertical length of the application window, the width of the application window may also be understood as a horizontal length of the application window, and the aspect ratio of the application window may also be understood as a horizontal/vertical ratio (namely, a ratio of a horizontal length to a vertical length) of the application window. Portrait display means that the aspect ratio of the application window is less than 1, for example, 9:16, 9:18, 9:20, or 10:16.

It should be noted that a quantity of applications started on the first device in a form of a free floating window and a specific application are not limited in this application.

For example, a software system of the first device may use a layered architecture, an event-driven architecture, a microkernel architecture, a microservice architecture, a cloud architecture, or the like. For example, in this application, an operating system of an electronic device (including the first device and the second device) may include but is not limited to Symbian^{®} (Symbian), Android^{®} (Android), Windows^{®}, iOS^{®} (iOS), Blackberry^{®} (Blackberry), and Harmony^{®} (Harmony). This is not limited in this application.

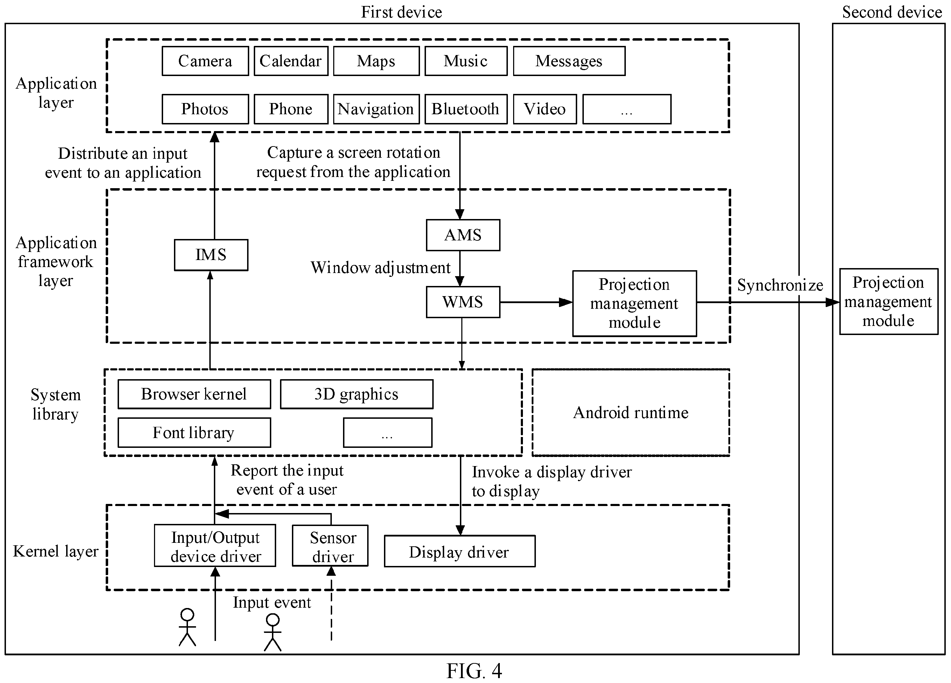

FIG. 4 shows a schematic diagram of an application display process in the multi-window projection scenario by using an Android system including the layered architecture as an example according to an embodiment of this application. As shown in FIG. 4, the Android system with the layered architecture may include an application layer, an application framework layer, a system library, an Android runtime, and a kernel layer.

The application layer may include a series of application packages, for example, application programs such as Camera, Photos, Calendar, Phone, Maps, Navigation, Bluetooth, Music, Video, and Messages. For ease of description, an application program is briefly described as an application below. The application of the first device may be a native application (for example, an application installed in the first device when the operating system is installed before delivery of the first device), or a third-party application (for example, an application downloaded and installed by a user from App Store). This is not limited in this embodiment of this application.

The application framework layer provides an application programming interface (application programming interface, API) and a programming framework for an application at the application layer. As shown in FIG. 4, the application framework layer may include a window manager service (window manager service, WMS), an activity manager service (activity manager service, AMS), an input manager service (input manager service, IMS), and a projection management module. In some embodiments, the application framework layer may further include a content provider, a view system, a phone manager, a resource manager, a notification manager, and the like (not shown in FIG. 4).

The WMS carries data and an attribute related to an "interface", and is used to manage a status related to the "interface", for example, to manage a window program and dispatch an event. Window program management means sequentially outputting, based on a display request of an application program, to a physical screen or another display device with the assistance of an application server end and a WMS. Event dispatching means dispatching a user event from a keyboard, a physical key, a touchscreen, a mouse, or a trackball (trackball) to a corresponding control or window. The window manager service may obtain a size of a display, determine whether there is a status bar, lock a screen, capture a screenshot, and the like.

The AMS manages an activity, including starting, switching, and scheduling components in the system, and managing and scheduling applications. Specifically, the AMS defines data classes that are separately used to store a process (Process), an activity (Activity), and a task (Task). The data class corresponding to the process (Process) may include process file information, memory status information of the process, an activity, a service, and the like that are included in the process. Information about the activity may be stored in an activity stack. The activity stack is used to uniformly schedule the activity. The activity stack may specifically store information about all running activities (namely, final ArrayList mHistory), for example, interface configuration information. For example, a running activity can be stored in a new array list. The activity stack may also store information about a historical activity, for example, interface configuration information. It should be noted that an activity does not correspond to an application, and an activity thread corresponds to an application. Therefore, Android allows a plurality of applications to run at the same time, which actually allows a plurality of activity threads to run at the same time.

In Android, the basic idea of activity scheduling is as follows: Each application process reports to the AMS when starting a new activity or stopping a current activity. The AMS records all application processes internally. When receiving a start or stop report, the AMS updates an internal record and then notifies a corresponding client process to run or stop a specified activity. The AMS has records of all activities. Therefore, the AMS can schedule these activities and automatically close a background activity based on statuses of the activity and system memory.

The IMS may be used to perform processing such as translation and encapsulation on an original input event, to obtain an input event including more information, and send the input event to the WMS. The WMS stores an area (for example, a control) that can be tapped of each application program, location information of a focus window, and the like. Therefore, the WMS can correctly distribute the input event to a specified control or focus window.

The content provider is configured to store and obtain data, and enable the data to be accessed by an application. The data may include video, an image, audio, calls that are made and received, a browsing history and a bookmark, a phone book, and the like.

The view system includes visual controls, such as a control for displaying a text and a control for displaying an image. The view system may be configured to construct an application. A display interface may include one or more views. For example, the display interface including a notification icon of messages may include a text display view and a picture display view.

The telephone manager is configured to provide a communication function of the first device, for example, management of a call status (including answering, hanging up, or the like).

The resource manager provides, for the application, various resources such as a localized character string, an icon, a picture, a layout file, and a video file.

The notification manager enables the application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be display in a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The projection management module is configured to manage a projection-related event, for example, transmitting a video stream corresponding to an application interface, and an interface configuration parameter. For another example, a screen rotation request from a projection device (for example, the second device) is received and distributed. For example, the projection management module may be Huawei Assistant, Manager, or the like. For example, Assistant may be a module configured to exchange projection-related information with another electronic device (for example, the second device). For example, Assistant may provide an API and a programming framework for communication between the first device and the another electronic device (for example, the second device). For example, when the projection device is a computer, Manager may be a computer manager, a computer assistant, or the like. In some possible embodiments, the projection management module can not only project a program running on the local device onto another device, but also receive and parse the video stream and related information that are sent by the another device, to display, on the local device, an application running on the another device. In some possible embodiments, the projection management module is split, and can implement only one function in the foregoing embodiment, to meet requirements of different device forms for the projection function.

The system library and Android runtime include functional functions that need to be invoked by the application framework layer, an Android core library, and an Android virtual machine. The system library may include a plurality of functional modules, for example, a browser kernel, 3 dimensional (3 dimensional, 3D) graphics, and a font library.

The system library may include a plurality of functional modules, for example, a surface manager (surface manager), media libraries (Media Libraries), a 3 dimensional graphics processing library (for example, OpenGL ES), and a 2D graphics engine (for example, SGL).

The surface manager is configured to manage a display subsystem and provide fusion of 2D and 3D layers for a plurality of applications.

The media libraries support playing and recording a plurality of commonly used audio and video formats, static image files, and the like. The media libraries may support a plurality of audio and video encoding formats such as MPEG 4, H.264, MP3, AAC, AMR, JPG, and PNG.

The 3 dimensional graphics processing library is configured to implement 3 dimensional graphics drawing, image rendering, composition, layer processing, and the like.

The 2D graphics engine is a drawing engine for 2D drawing.

The kernel layer is a layer between hardware and software. The kernel layer may include a display driver and an input/output device driver (for example, a keyboard, a touchscreen, a headset, a speaker, or a microphone), a device node, a camera driver, an audio driver, a sensor driver, and the like. The user performs an input operation by using an input device, and the kernel layer may generate a corresponding original input event based on the input operation, and store the original input event in the device node.

In this application, the IMS may respond to a received input event. As shown in FIG. 4, the input/output device driver may detect the input event of the user. For example, when the user starts the operation of the application, the input/output device driver reports the input event of the user to the IMS, the IMS forwards the input event to the WMS, and the WMS distributes the input event to the corresponding application. The application sends a registration request to the AMS, and the application starts.

In this embodiment of this application, in a process in which the first device performs projection onto the second device, if the second device receives the screen rotation request of the user for the application, for example, the user taps the button configured to initiate landscape display or portrait display, the user indicates instructions for initiating landscape display or portrait display through voice, or the user performs a preset pressing operation on the hardware device of the first device configured to indicate to initiate landscape display or portrait display, or the like, the second device indicates the screen rotation request to a corresponding application by using a communication connection between the first device and the first device. Then, the application sends the screen rotation request to the WMS.

After capturing (for example, hook) the screen rotation request of the application, the AMS may determine whether the application supports window resizing (resize). If the application can support resizing, the AMS redetermines the display size of the application interface based on the screen rotation request of the application. Capturing means intercepting and monitoring transmission of an event before the event is transmitted to an end point. For example, the hook technology can be used to hook an event like a hook before the event is transmitted to the end point, handle the event in time, and respond to the event in time. In this embodiment of this application, the AMS may respond to the screen rotation request immediately after hooking the screen rotation request of the application.

Then, the AMS recalculates the configuration parameter of the application interface based on the redetermined display size of the application interface. The configuration parameter of the application interface may include but is not limited to a control (an icon, text, a specific display position, and/or a size of each icon and text) displayed on the application interface. For details about the configuration parameter of the application interface, refer to the conventional technology. This is not limited in this application. Finally, the AMS updates the configuration parameter of the application interface in the activity thread (Activity Thread) based on a recalculated configuration parameter of the application interface. In addition, the AMS synchronizes the redetermined display size of the application interface to the projection management module (for example, Assistant or Manager) of the second device by using the projection management module (for example, Assistant or Manager) of the first device, so that the second device displays the application interface on the display based on the display size of the application interface. In some embodiments, the first device may further send information such as coordinates of the application interface, a boundary size of the application interface, a relative position between the application interfaces, and an attribute of the application to the second device by using the projection management module.

In some embodiments, as shown in FIG. 4, after the AMS recalculates the configuration parameter of the application interface, the AMS may further invoke the WMS interface based on the determined display size of the application interface and the determined configuration parameter of the application interface so that the WMS draws, based on the configuration parameter of the display size, a window corresponding to the activity. It may be understood that the window (application program) corresponding to the activity may include a plurality of activities, and the AMS and the WMS may also adjust another activity other than the foregoing activity according to the foregoing method.

For example, after obtaining the display size of the application interface and the configuration parameter of the application interface, the WMS may determine whether there is an activity window matching the display size and the configuration parameter in the background. If there is an activity window matching the display size and the configuration parameter in the background, the WMS sets the activity window that matches the display size and configuration parameter to visible. If there is not an activity window matching the display size and the configuration parameter in the background, the WMS creates a new activity window based on the display size and the configuration parameter, draws window content, and invokes the display driver to display the drawn window content, thereby presenting the interface to the user.

It should be noted that FIG. 4 uses only the Android system with the layered architecture as an example to describe the application interface display process in the multi-window projection scenario. A specific architecture of the software system of the first device is not limited in this application. For specific descriptions of the software system of another architecture, refer to the conventional technology.

Generally, based on different projection requirements, the projection manner may include two types: same-source projection and different-source projection.

Same-source projection means that interfaces of one or more projection applications started on the first device are projected onto the second device in a screen extension manner. In the same-source projection manner, the first device sends, to the second device by using one channel of encoding, the projection application interface rendered on the virtual display and the video stream corresponding to a default interface, to display, on the display of the second device, the default interface and the interface of the one or more projection applications started in a form of a free floating window on the first device. The default interface may be understood as the interface displayed by the first device.

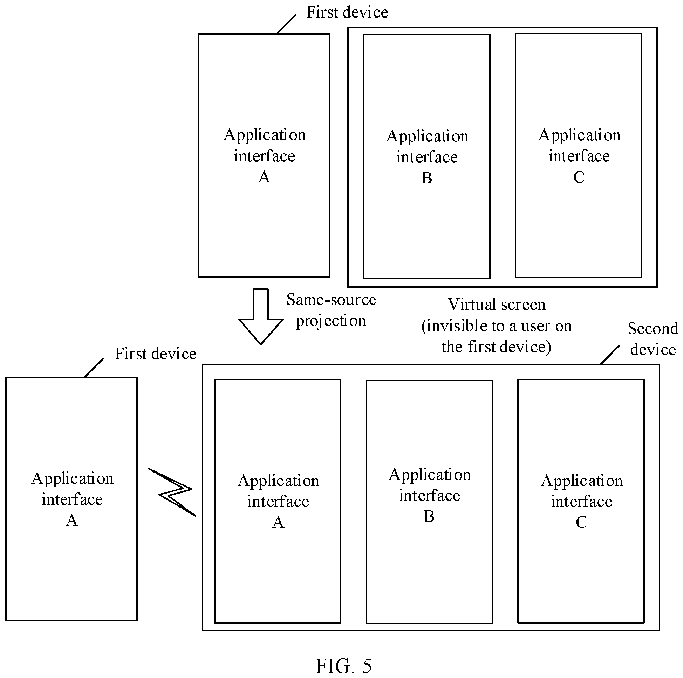

It is assumed that when displaying an application interface A, the first device starts an application B and an application C in a form of a free floating window in response to the operation of the user. In this case, the first device renders the application interface A, the application interface B, and the application interface C together on the main display (main display) and the virtual display of the first device. The application interface A is rendered on the main display and the application interface B and the application interface C are rendered on the virtual display. FIG. 5 is a schematic diagram of same-source projection. As shown in FIG. 5, that the default interface is used as the application interface A is used as an example, when the first device performs projection onto the second device in a same-source projection manner, the first device sends a standard video stream corresponding to the projection application interface and the default interface (namely, the application interface A) on the virtual display on the second device by using one channel of encoding, and displays the default interface (namely, the application interface A). The application interface A (namely, the default interface) shown in FIG. 5 is displayed on the display of the first device, and the application interface A (namely, the default interface) shown in FIG. 5, the application interface B, and the application interface C are displayed on the display of the second device.

In the different-source projection manner, the first device uses two channels of encoding, and the one channel of encoding displays the default interface (that is, displays the default interface on the display of the first device). The another one channel of encoding sends the standard video stream corresponding to the projection application interface rendered on the virtual display to the second device.

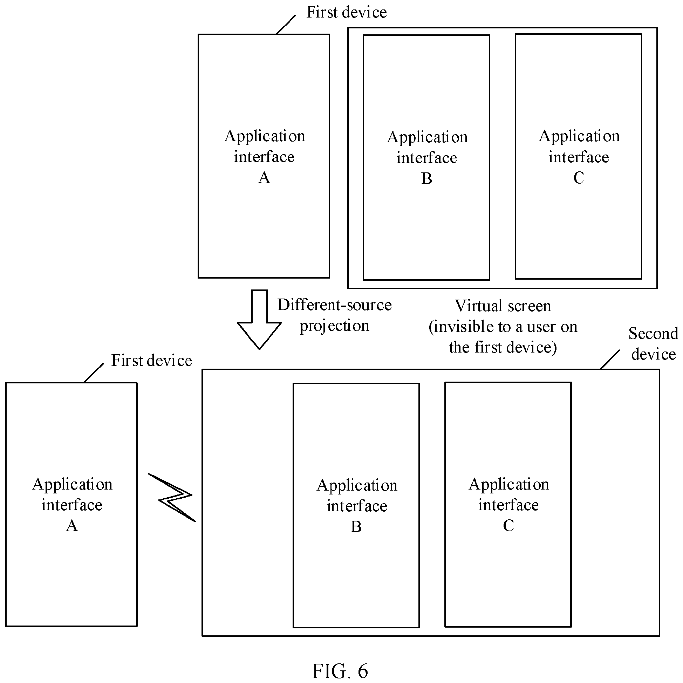

It is assumed that when the application interface A is displayed, the first device starts the application B and the application C in a form of a free floating window in response to the operation of the user. In this case, the first device renders the application interface A, the application interface B, and the application interface C together on the main display and the virtual display of the first device. The application interface A is rendered on the main display and the application interface B and the application interface C are rendered on the virtual display. FIG. 6 is a schematic diagram of different-source projection. As shown in FIG. 6, that the default interface is used as the application interface A is used as an example, when the first device performs projection onto the second device in a different-source projection manner, the first device sends, through one channel of encoding, the video stream corresponding to the default interface (namely, the application interface A) to the display of the first device and sends the video streams corresponding to the application interface B and the application interface C to the second device by using the another one channel of encoding. The application interface A (namely, the default interface) shown in FIG. 6 is displayed on the display of the first device, and the application interface B and the application interface C shown in FIG. 6 are displayed on the display of the first device.

It can be understood that the same-source projection manner and the different-source projection manner have respective advantages and disadvantages. For example, the same-source projection manner can ensure application continuity. In the different-source projection manner, when different screens are switched, the application needs to be restart. For example, for the example shown in FIG. 6, if the application interface B or the application interface C needs to be processed on the first device, the interface of the application B or the application C needs to be switched back to the first device. Specifically, display switching needs to be completed, and in a display switching process, the application is inevitably restart. However, the different-source projection manner has better isolation. For example, the different-source projection manner may provide an independent control screen for users (namely, the display of the first device and the display of the second device) to handle different interfaces.

It should be noted that the application interface display method in the multi-window projection scenario provided in this application is applicable to both the same-source projection manner and the different-source projection manner. In other words, regardless of the same-source projection manner or the different-source projection manner, the first device may use the method provided in this embodiment of this application to project, onto the second device in the adapted state (for example, landscape display or portrait display) and the adapted size, the interface of the one or more applications that are started in the form of the free floating window on the first device.

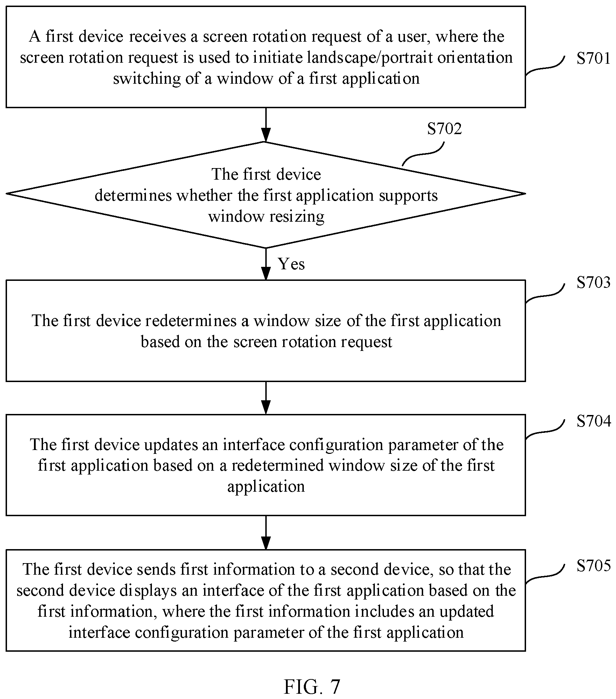

As shown in FIG. 7, an application interface display method in a multi-window projection scenario provided in this embodiment of this application may include the following steps S701 to S705.

S701: Receive a screen rotation request of a user by a first device, where the screen rotation request is used to initiate landscape/portrait orientation switching of a window of a first application.

The first device receives the screen rotation request from a projection device (namely, a second device).

In some embodiments, the screen rotation request is determined by the second device based on a first operation performed by the user on the second device and sent to the first device. The first operation is the screen rotation operation performed by the user on the second device for the window of the first application in the one or more application interfaces of the second device that is projected by the first device.

The first application is any application that is projected by the first device onto the second device. It should be noted that, if the first device performs projection onto the second device in the same-source projection manner, the screen rotation request of the user for a default interface is used to initiate synchronous landscape/portrait orientation switching of the window of the first application displayed on the first device end and the second device end. However, the screen rotation request of the user for a non-default interface can only be used to initiate landscape/portrait orientation switching of the window of the first application displayed on the second device end.

In some other embodiments, the screen rotation request is determined by the first device based on a second operation performed by the user on the first device. The second operation is the screen rotation operation performed by the user on a default interface window displayed on the first device. It should be noted that, if the first device performs projection onto the notebook computer in the same-source projection manner, the screen rotation request of the user is used to initiate synchronous landscape/portrait orientation switching of the window of the first application displayed on the first device end and the second device end. If the first device performs projection onto the second device in the different-source projection manner, because the second device end does not display the default interface window during different-source projection, the screen rotation request of the user can only be used to initiate landscape/portrait orientation switching of the window of the first application displayed on the first device end.

The landscape/portrait orientation switching of the window may include but is not limited to switching the window from portrait display to landscape display, or switching from landscape display to portrait display. As shown above, landscape display means that an aspect ratio (namely, a ratio of a width to a height) of the application window is greater than 1, and portrait display means that the aspect ratio of the application window is less than 1.

In this application, the first operation and the second operation may include but is not limited to rotating a screen, tapping a virtual button, a preset touch gesture, or a preset operation (for example, pressing a power button and a "+" volume button of a mobile phone at the same time) or voice instructions on actual hardware, or the like. This is specifically determined by an input device driver supported by the second device and is not limited in this embodiment of this application.

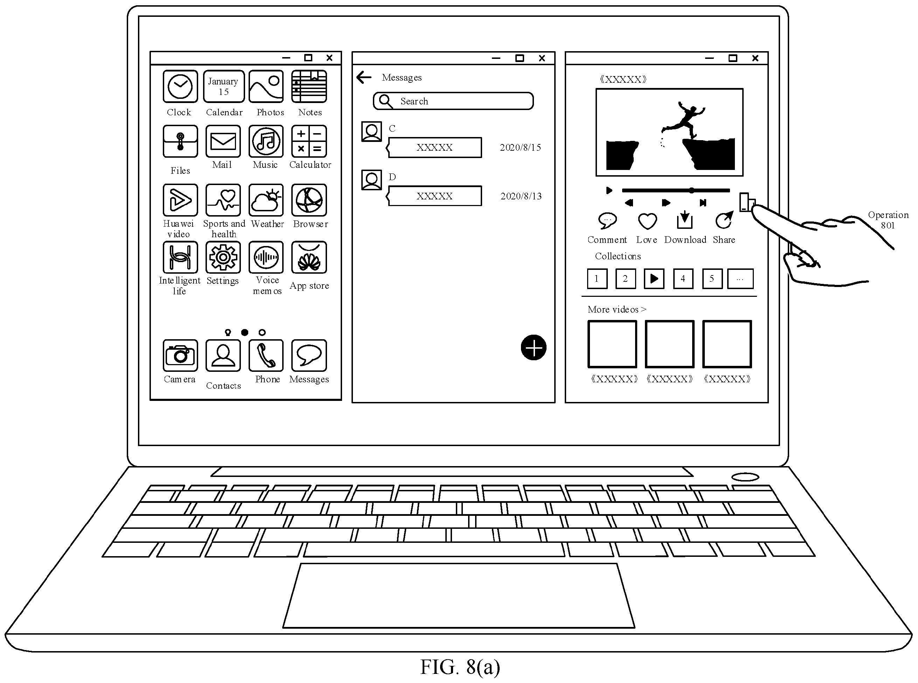

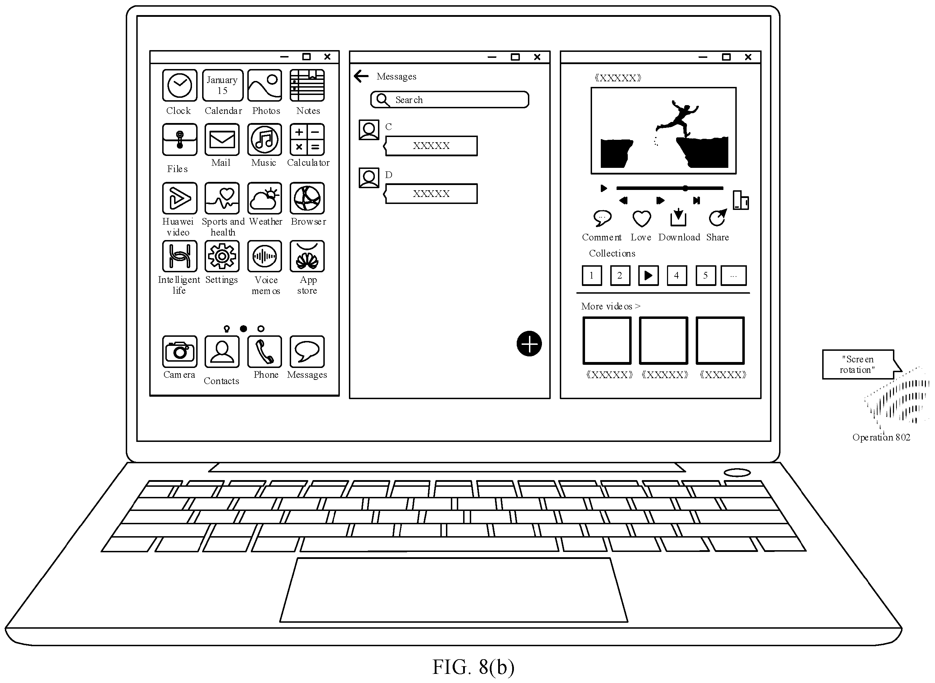

For example, it is assumed that the mobile phone (namely, the first device) projects the default interface, the first application interface, and the second application interface onto the notebook computer (namely, the second device) in the same-source projection manner. The default interface is a mobile phone desktop, the first application interface is a video application interface, and the second application interface is a short message application interface. It is assumed that the first application is a video application. As shown in FIG. 8(a), the first operation of the user is an operation 801 of tapping, by the user, the virtual button that is displayed on the video application interface of the notebook computer and that is configured to initiate screen rotation. Alternatively, as shown in FIG. 8(b), the first operation of the user is an operation 802 in which the user indicates instructions for initiating screen rotation through voice. A current active interface is an interface operated by the user last time.

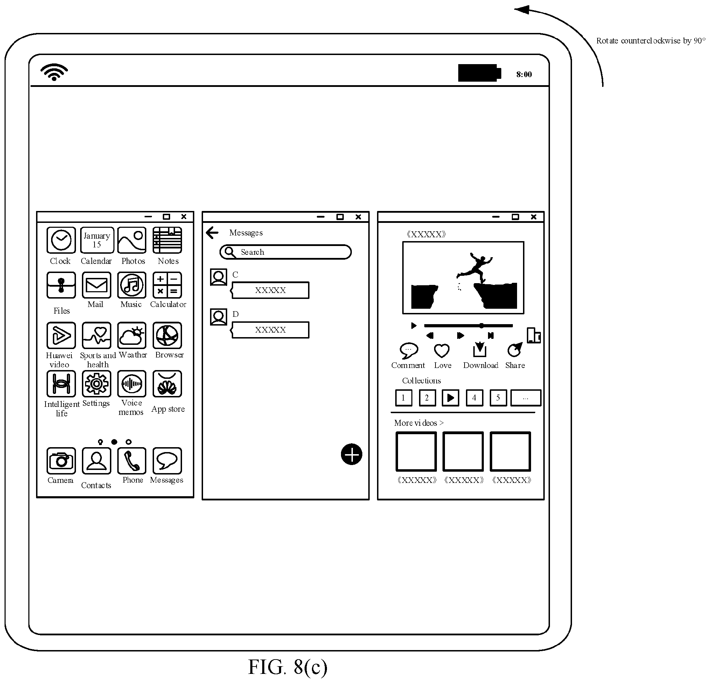

For another example, it is assumed that the mobile phone (namely, the first device) projects the mobile phone desktop, the short message application interface, and the video application interface onto the tablet computer (namely, the second device) in the same-source projection manner, where the first application is the video application, as shown in FIG. 8(c). The first operation of the user is an operation that the user rotates a tablet computer screen from the portrait state to the landscape state (rotating by 90 degrees counterclockwise as shown in FIG. 8(c).

The first operation shown in FIG. 8(b) is an operation that the user indicates to initiate screen rotation instructions through voice, or the first operation shown in FIG. 8(c) is an operation in which the user rotates the screen. The first operation is for a current active window (namely, the focus window). For example, when the current active window (namely, the focus window) is the video application window, the first operation is that the user initiates the screen rotation request of the video application.

It should be noted that, FIG. 8 shows three possible forms of the first operation by using an example in which three interfaces (a mobile phone desktop, a video application interface, and a short message application interface) are projected onto the second device, and the first application is a video application. A quantity of application interfaces that are projected onto the second device, a relative location relationship between the interfaces on the display of the second device, and the like are not limited in this application. In addition, a specific form of the first operation is not limited in this application. For example, the first operation may alternatively be another tap operation, double-tap operation, touch and hold operation, heavy pressing operation, hover gesture operation, or the like.

Similarly, the second operation may also be an operation, of tapping a virtual button to initiate screen rotation, that is performed by the user on the first device and that is similar to (a) in FIG. 8, an operation, of initiating screen rotation indicated by voice instructions, that is similar to FIG. 8(b), or an operation, of rotating the screen, that is performed by the user and that is similar to FIG. 8(c). Alternatively, the second operation may be another tap operation, double-tap operation, touch and hold operation, heavy pressing operation, hover gesture operation, or the like. This is not limited in this application.

If the screen rotation request is determined by the second device based on the first operation performed by the user on the second device and sent to the first device, specifically, after receiving the first operation of the user that is used to initiate the screen rotation request of the first application, the input/output device driver or the sensor driver of the second device sends the screen rotation request to the first device by using communication connection between the second device and the first device. For example, the first device is the mobile phone, the second device is the notebook computer, and operating systems of the mobile phone and the notebook computer are Android systems with the layered architecture. The notebook computer may send the screen rotation request to the projection management module (for example, Assistant or Manager) of the mobile phone by using the projection management module (for example, Assistant or Manager). The projection management module of the mobile phone distributes the screen rotation request to a corresponding application (namely, the first application). After capturing (for example, hook) the screen rotation request from the first application, the AMS responds to the screen rotation request. In other words, the mobile phone continues to perform the following steps S702 to S705.

If the screen rotation request is determined by the first device based on the second operation performed by the user on the first device, specifically, after receiving the second operation of the user that is used to initiate the screen rotation request of the first application, the input/output device driver or the sensor driver of the first device reports the input event of the user to the IMS. The IMS distributes the input event to the corresponding application (namely, the first application) by using the WMS. After capturing (for example, hook) the screen rotation request from the first application, the AMS responds to the screen rotation request. In other words, the first device continues to perform the following steps S702 to S705.

S702: The first device determines whether the first application supports window resizing (resize).

Specifically, for an application that supports resizing, the first device continues to perform step S703. For an application that does not support resizing, the first device exits the process of responding to the screen rotation request. Resizing may include but is not limited to window shape adjustment and/or window size adjustment.

Generally, whether the application supports resizing may be determined by using an obtained application development attribute and/or application data configuration. If the application supports resizing, it indicates that the application window can be adjusted, including window shape adjustment and window size adjustment. If the application supports resizing, the application window cannot be adjusted.

S703: The first device redetermines a window size of the first application based on the screen rotation request.

The window size may include but is not limited to a window shape and/or a window size.

In a possible embodiment, if the screen rotation request is used to switch the window of the first application from portrait display to landscape display, step S703 may specifically include: The first device adjusts the window size of the first application based on the screen rotation request so that a width of the window of the first application is greater than a height of the first application. For example, the aspect ratio of the window of the first application is redetermined as 16:9, 18:9, 20:9, 16:10, or the like. For another example, a range of the window of the first application is redetermined from (0, 0, 1080, 2340) to (0, 0, 2340, 1080), where (0, 0) is coordinates of a lower left corner, a lower right corner, an upper left corner, or an upper right corner of the window of the first application in a coordinate system of the first device, and depends on specific setting of a coordinate system of the first device, 2340 is the width of the window of the first application, and 1080 is the height of the window of the first application.

In another possible embodiment, if the screen rotation request is used to switch the window of the application from landscape display to portrait display, step S703 may specifically include: The first device adjusts the window size of the first application based on the screen rotation request so that a width of the window of the first application is less than a height of the first application. For example, the aspect ratio of the window of the first application is redetermined as 9:16, 9:18, 9:20, 10:16, or the like. For another example, the range of the window of the first application is redetermined from (0, 0, 2340, 1080) to (0, 0, 1080, 2340), where (0, 0) is coordinates of the lower left corner, the lower right corner, the upper left corner, or the upper right corner of the window of the first application in the coordinate system of the first device, and depends on the specific setting of the coordinate system of the first device, 1080 is the width of the window of the first application, and 2340 is the height of the window of the first application.

The following describes, with reference to three possible cases, a case in which the first device redetermines the window size of the first application based on the screen rotation request.

Case 1: The first device redetermines the window size of the first application based on the configuration of the application development attribute and/or the application data configuration, and the screen rotation request.

For example, it is assumed that the window of the first application is displayed in portrait display, and the range of the window of the first application is (0, 0, 1080, 2340). If the screen rotation request is used to switch the window of the first application from portrait display to landscape display, the application development attribute and/or application data configuration indicates that the first application supports resize. Specifically, if the first application supports landscape display, the first device may redetermine the window size of the first application as (0, 0, 2340, 1080).

For another example, it is assumed that the window of the first application is displayed in landscape display, and the range of the window of the first application is (0, 0, 2340, 1080). If the screen rotation request is used to switch the window of the first application from landscape display to portrait display, the application development attribute and/or application data configuration indicates that the first application supports resize. Specifically, if the first application supports portrait display, the first device may redetermine the window size of the first application as (0, 0, 1080, 2340).

Case 2: The first device redetermines the window size of the first application based on the application development attribute and/or application data configuration, the size of the display of the first device, and the screen rotation request.

For example, it is assumed that the window of the first application is displayed in portrait display, the range of the window of the first application is (0, 0, 1080, 2340), and the aspect ratio of the display of the first device is 16:9. If the screen rotation request is used to switch the window of the first application from portrait display to landscape display, the application development attribute and/or application data configuration indicates that the first application supports resize. Specifically, if the first application supports landscape display, the first device may redetermine the window size of the first application as (0, 0, 2340, 1316).

For another example, it is assumed that the window of the first application is displayed in landscape display, the range of the window of the first application is (0, 0, 2340, 1080), and the aspect ratio of the display of the first device is 16:9. If the screen rotation request is used to switch the window of the first application from landscape display to portrait display, the application development attribute and/or application data configuration indicates that the first application supports resize. Specifically, if the first application supports portrait display, the first device may redetermine the window size of the first application as (0, 0, 1080, 1920).

Case 3: The first device redetermines the window size of the first application based on the application development attribute and/or application data configuration, the size of the display of the projection device (namely, the second device), and the screen rotation request.

For example, it is assumed that the window of the first application is displayed in portrait display, the range of the window of the first application is (0, 0, 1080, 2340), and the aspect ratio of the display of the second device is 3:2. If the screen rotation request is used to switch the window of the first application from portrait display to landscape display, the application development attribute and/or application data configuration indicates that the first application supports resize. Specifically, if the first application supports landscape display, the first device may redetermine the window size of the first application as (0, 0, 2340, 1560).

For another example, it is assumed that the window of the first application is displayed in landscape display, the range of the window of the first application is (0, 0, 2340, 1080), and the aspect ratio of the display of the second device is 3:2. If the screen rotation request is used to switch the window of the first application from landscape display to portrait display, the application development attribute and/or application data configuration indicates that the first application supports resize. Specifically, if the first application supports portrait display, the first device may redetermine the window size of the first application as (0, 0, 1080, 1620).

S704: The first device updates the interface configuration parameter of the first application based on the redetermined window size of the first application.

The interface configuration parameter of the application may include but is not limited to boundary information after the application window is resized, an orientation of the application, an icon and a text displayed on the application interface, and a specific display position, size, and color of each icon, text and the like. The orientation of the application can be displayed in landscape display or portrait display. For details about the interface configuration parameter of the application, refer to the conventional technology. This is not limited in this application.

In this application, the interface configuration parameter of the first application obtained by the first device is adapted to the redetermined window size of the first application. It may be understood that because the first device is about to adjust the window size of the first application, the previous interface configuration parameter obviously is not adapted to the adjusted window size. If the interface configuration parameter of the first application is not recalculated, display of an icon and/or a text on the first application interface is affected. For example, some content is displayed in an overlapping manner, and some content cannot be completely displayed. To resolve the foregoing problems, the first device needs to re-obtain the interface configuration parameter of the first application after redetermining the window size of the first application.

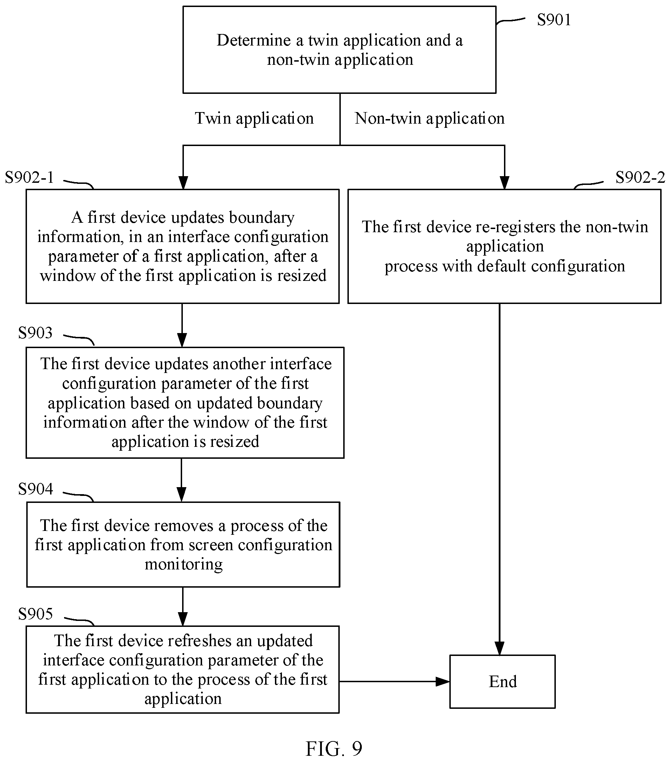

In some embodiments, the first device may update, based on the redetermined window size of the first application, the boundary information after the first application is resized in the interface configuration parameter of the first application. Further, in some embodiments, the first device may update the orientation of the application in the interface configuration parameter of the first application based on the boundary information after the first application is resized. Further, in some embodiments, the first device may update other configuration parameters in the interface configuration parameter of the first application based on the boundary information after the first application is resized and the orientation of the updated application, for example, the icon or the text displayed on the application interface, and the specific display position, size, and color of each icon, text, and the like. A specific method and process of step S704 (that is, the first device updates the interface configuration parameter of the first application based on the redetermined window size of the first application) are described in detail in the following descriptions of FIG. 9.

S705: The first device sends the first information to the second device so that the second device displays the first application interface based on the first information, where the first information includes an updated interface configuration parameter of the first application.

In this application, communication connection is established between the first device (for example, the mobile phone) and the second device (for example, the notebook computer). For example, communication connection may be wired connection (for example, data transmission line connection) or wireless connection (for example, Bluetooth connection, Wi-Fi connection, and Wi-Fi P2P connection). The first device may send the first information to the second device by using communication connection between the first device and the second device so that the second device displays the application interface based on the first information.

For example, the first device (for example, the mobile phone) may send the first information to the projection management module (for example, Assistant or Manager) of the second device (for example, the notebook computer) by using the projection management module (for example, Assistant or Manager) shown in FIG. 4 so that the notebook computer displays the first application interface based on the first information.

In some embodiments, as shown in FIG. 9, step S704 (that is, the first device updates the interface configuration parameter of the first application based on the redetermined window size of the first application) may specifically include the following steps: S901: The first device determines a twin application and a non-twin application.

The twin application is an application that is projected onto the second device, for example, the first interface, the first application interface, and the second application interface shown in FIG. 5. For another example, the twin application is the first application interface and the second application interface shown in FIG. 6. The non-twin application is an application that is displayed only on the display of the first device and is not projected onto the second device (for example, the application corresponding to the default interface in different-source projection manner), for example, the first interface shown in FIG. 6.

In some embodiments, the twin application may also be referred to as a "target application", namely, an application that is projected onto a target device (namely, the second device). The non-twin application may also be referred to as a "non-target application". A specific name is not limited in this application. In the following embodiments, the twin application and the non-twin application are used as examples for specific descriptions.

For the twin application, the first device performs step S902-1, and then performs step S903 to step S905. For the non-twin application, a first device machine performs step S902-2.

S902-1: The first device updates the boundary information, in the interface configuration parameter of the first application, after the first application is resized.

The interface configuration parameter of the first application may include but is not limited to the boundary information (hereinafter referred to as boundary information after the first application is resized) after the application window of the first application is resized, the orientation of the application, the icon and the text displayed on the application interface, and the specific display position, size, and color of each icon and text. After updating the boundary information after the first application is resized, the first device may further update, based on the boundary information after resizing, the other configuration parameters in the interface configuration parameter of the first application, for example, the orientation of the application, and the icon or the text displayed on the interface of the application, and the specific display position, size, and color of each icon, text, and the like.

For example, the first device may update, based on the redetermined window size of the first application, the boundary information after the first application is resized.

Specifically, the first device may obtain the activity record of running at the top of the stack of the current activity stack, obtain the configuration parameter of a process of the first application (for example, obtained by using the WindowProcessController), and then update the boundary information in the interface configuration parameter of the process of the first application based on the redetermined window size of the first application.

S902-2: The first device re-registers a non-twin application process with default configuration.

In this embodiment of this application, if the application process is registered with the default configuration, when the display of the first device (for example, the mobile phone) rotates, the interface configuration parameter of the application is updated to the activity thread in response to a display rotation event, and then displayed. In other words, the non-twin application still switches interface display of the application on the display of the first device (for example, the mobile phone) based on the display rotation event received by the first device (for example, the mobile phone).

S903: The first device updates, based on updated boundary information after the first application is resized, another interface configuration parameter of the first application.

In some embodiments, a principle in which the first device updates the orientation of the application in the interface configuration parameter of the first application is as follows: If the first device determines, based on the boundary information after the first application is resized, that the width of the window of the first application is greater than the height of the first application, the first device updates the orientation of the application in the interface configuration parameter of the first application to landscape display. If the first device determines, based on the boundary information after the first application is resized, that the height of the window of the first application is greater than the width, the first device updates the orientation of the application in the interface configuration parameter of the first application to portrait display.

Further, after the first device updates the orientation of the application in the interface configuration parameter of the first application, the first device may obtain, based on the boundary information after the first application is resized and the orientation of the application, the another configuration parameter, for example, the icon and text displayed on the application interface in the interface configuration parameters of the first application, the specific display location, the size, and the color of each icon, text, and the like.

S904: The first device removes the process of the first application from the screen configuration monitoring.

Removing the application process from the screen configuration monitoring is used to prevent the application from responding to the display rotation event. Therefore, after the first device removes the process of the first application from the screen configuration monitoring, the first application does not respond to the display rotation event of the first device. In other words, regardless of how the display of the first device rotates and whether the display of the first device is in the landscape state or the portrait state, the twin application is displayed by using the configuration parameter updated in step S903.

S905: The first device refreshes the updated interface configuration parameter of the first application to the process of the first application.

For example, the operating system of the first device is the Android system with the layered architecture. The AMS of the first device may refresh the obtained interface configuration parameter of the first application to the activity thread (ActivityThread).

It should be noted that, in the multi-window projection process provided in this application, the first device may receive, in the projection process, an operation of switching the non-twin application to the twin application by the user, and refresh the interface configuration parameter of the first application again. For example, when an operation, for example, tapping the virtual button displayed on a non-twin application interface, a preset touch gesture, or a preset operation or a voice instruction for actual hardware, is received and used by the user to initiate switching from a non-twin application to a twin application, the interface configuration parameter of the first application is refreshed again. For example, the manner of the first application in the configuration parameter is switched to a full-screen manner, and the window size of the first application is switched to adapt to the first device. This application does not limit a specific operation that is used by the user to initiate switching from the non-twin application to the twin application.

In the application interface display method in the multi-window projection scenario provided in this embodiment of this application, when the first device initiates, for an application, the screen rotation request for landscape/portrait orientation switching of the window, the first device determines, based on the specific screen rotation request, configuration parameters such as the window size corresponding to the application interface, the orientation of the application, the icon and text displayed on the application interface, and the specific display position, size, and color of each icon, text and the like, and further refreshes the determined configuration parameters to the process of the first application; and synchronizes them to the projection device, so that the application can be projected onto the display of the second device in the adapted state (for example, landscape display or portrait display) and the adapted size, thereby improving user experience of projection.

For example, in a case in which the first application shown in FIG. 8(a) or FIG. 8(b) is the video application, if the same-source projection manner in the conventional method is used, in response to receiving the screen rotation request (which is used to initiate a request for switching the video application window from portrait display to landscape display), the mobile phone redetermines that the width of the window corresponding to the video application interface is greater than the height of the window. However, because the current status of the mobile phone is the portrait state, the application process of the video application is configured by default, and the mobile phone can still be projected onto the second device (for example, the notebook computer) based on the default configuration or only in the portrait display state. It is assumed that the first operation is the operation 801 shown in FIG. 8(a) that the user taps the virtual button displayed on the video application interface and configured to initiate screen rotation. If the conventional different-source projection method is used, only the resize operation is performed, and the interface of the video application is displayed abnormally. The entire video picture is compressed into a portrait display area of the display of the notebook computer.

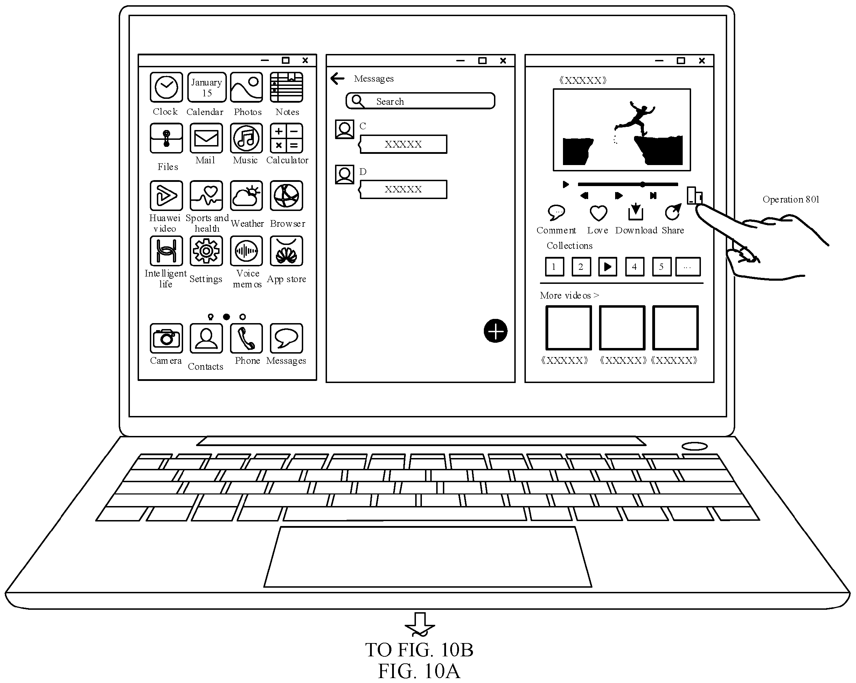

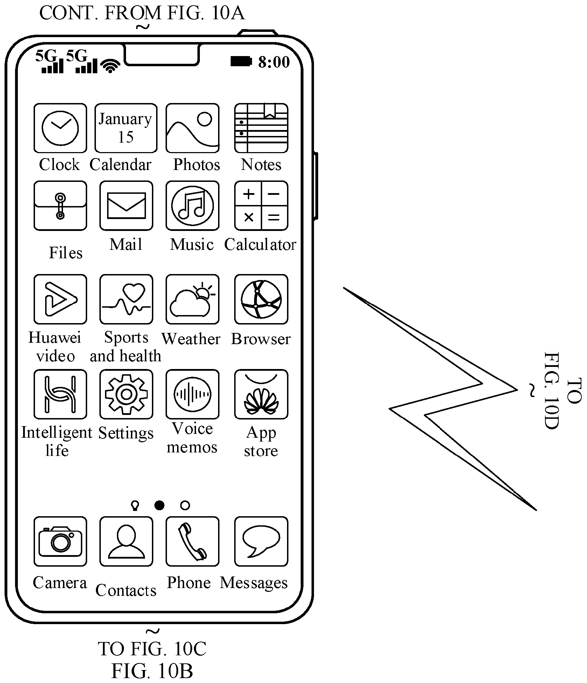

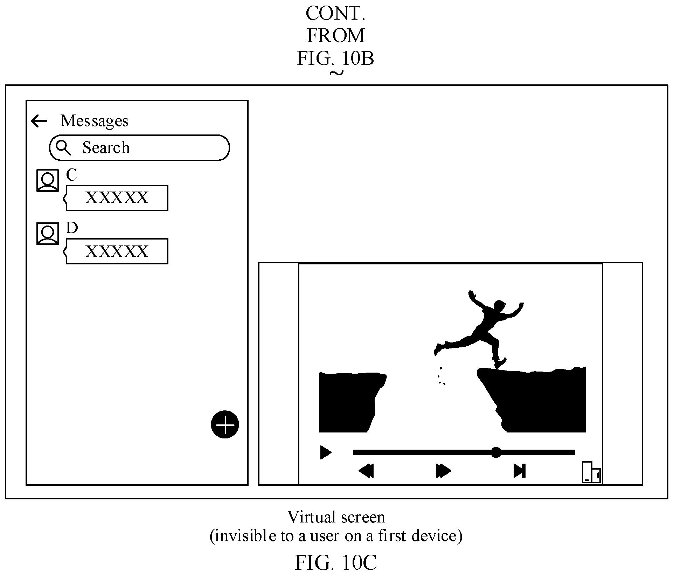

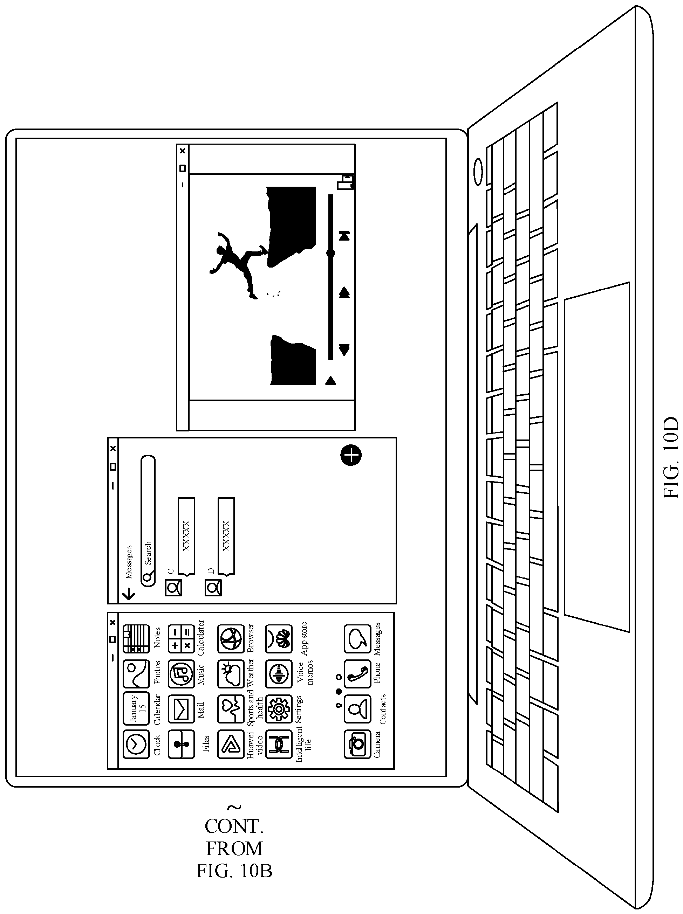

However, by using the application interface display method in the multi-window projection scenario provided in this application, it is assumed that the first device projects onto the second device in the same-source projection manner. When the first device receives the screen rotation request that is from the second device and determined based on the first operation shown in the operation 801 in FIG. 10A, FIG. 10B, FIG. 10C, and FIG. 10D, after the resize operation, the first device refreshes the re-obtained configuration parameters such as the orientation of the application, the icon and text displayed on the application interface, the specific display position, size, and color of each icon and text to the application process, and synchronizes the configuration parameters to the second device (for example, the notebook computer). As shown in FIG. 10A, FIG. 10B, FIG. 10C, and FIG. 10D, the video application interface can be projected onto the display of the notebook computer in the landscape display state, to improve user experience of projection.

Further, as described above, because the first device may redetermine the window size of the first application based on the application development attribute and/or application data configuration based on the screen rotation request (namely, Case 1). Alternatively, the window size of the first application may be redetermined based on the application development attribute and/or application data configuration, and the size of the display of the first device based on the screen rotation request (namely, Case 2). Alternatively, the window size of the first application may be redetermined based on the application development attribute and/or application data configuration, and the size of the display of the projection device (namely, the second device) based on the screen rotation request (namely, Case 3). Therefore, after the first device determines whether the first application supports window resizing (resize), a specific method for redetermining the window size of the first application may be further determined.

In some embodiments, compared with portrait display, for the interface of a video application program shown in FIG. 10A, FIG. 10B, FIG. 10C, and FIG. 10D, only width and height exchange adjustment is performed, and width and height enlargement or reduction are not performed. In some other embodiments, the video application program may alternatively display the video application program in a full-screen display form (width and height enlargement), that is, the window of the video application program occupies the display area of an entire display of the second device. In some embodiments, because the screen ratios of the first device (16:9) and the second device (4:3) are different, the video source/file (4:3) that can be completely displayed on the first device is stretched and displayed on the second device, or an area that cannot be filled with video is black. In this case, although the application can be switched between landscape and portrait, user experience is still not good.

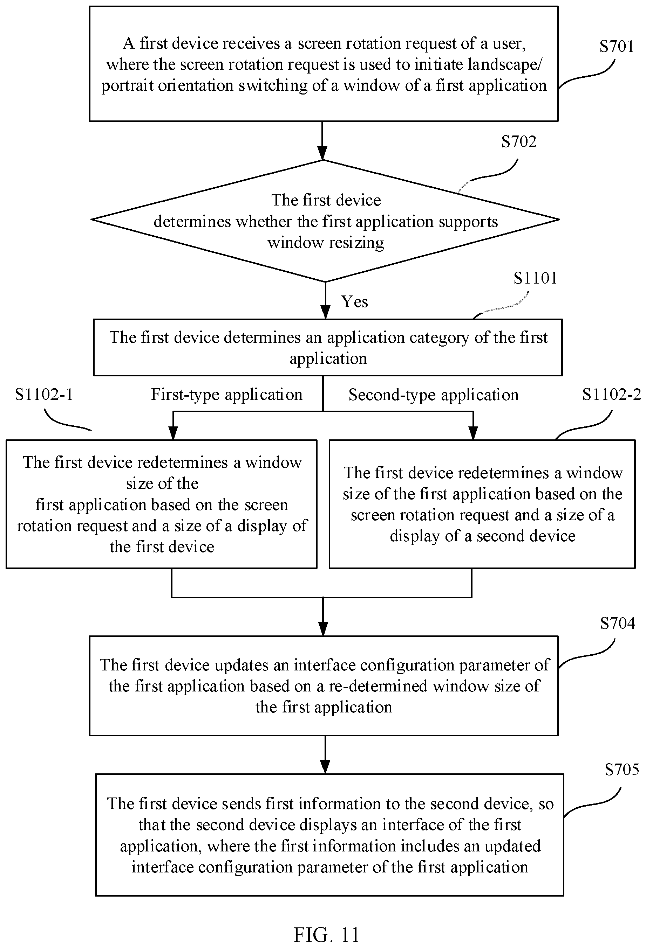

For example, as shown in FIG. 11, in some embodiments, after the first device performs the foregoing step S702, the application interface display method in the multi-window projection scenario provided in this embodiment of this application may further include step S 1101.

S1101: The first device determines the application category of the first application.

For example, the first device may determine the application category of the first application based on the application package name (for example, an Android application package (Android application package, APK) name) or the application development attribute or application data.

For example, if the first application is a first-type application (for example, a non-video application), the first device redetermines the window size of the first application based on another common factor. For example, the window size of the first application is redetermined by using a specific method corresponding to Case 1 or Case 2 or another similar method.

For example, step S703 shown in FIG. 7 may be replaced with step S1102-1 shown in FIG. 11.

S1102-1: The first device redetermines the window size of the first application based on the size of the display of the first device and the screen rotation request.

For example, it is assumed that the first device is the mobile phone and the second device is the notebook computer. Refer to FIG. 10A, FIG. 10B, FIG. 10C, and FIG. 10D. In response to receiving the screen rotation request (which is used to initiate a request for switching the video application window from portrait display to landscape display), when determining that the corresponding application is a second-type application, the mobile phone redetermines the video application window based on the size of the display of the notebook computer. Based on this solution, the mobile phone determines that the size of the video application window is in landscape display and is projected onto the notebook computer in a size adapted to the size of the display of the notebook computer.

For another example, in this application, the window size of the application that is projected onto the second device (namely, the notebook computer) shown in FIG. 1A and FIG. 1B, FIG. 8(a), and FIG. 8(b) is determined based on the size of the display of the first device (namely, the mobile phone).

If the first application is the second-type application (for example, the video application), the first device determines to redetermine the window size of the first application based on the size of the display of the second device (for example, the notebook computer). For example, the window size of the first application is redetermined by using a specific method corresponding to Case 3 or another similar method.

For example, step S703 shown in FIG. 7 may be replaced with step S1102-2 shown in FIG. 11.

S1102-2: The first device redetermines the window size of the first application based on the size of the display of the second device based on the screen rotation request.

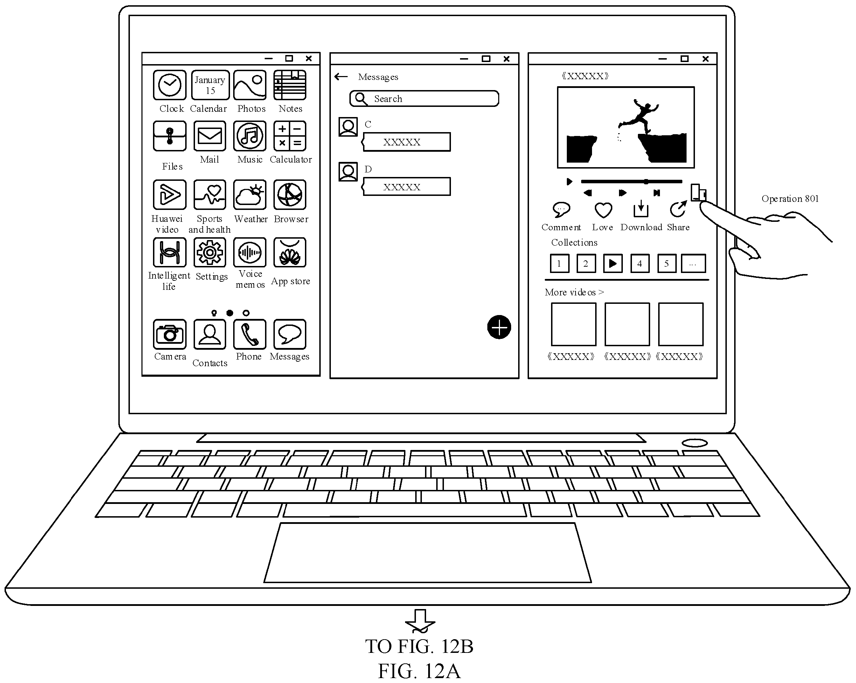

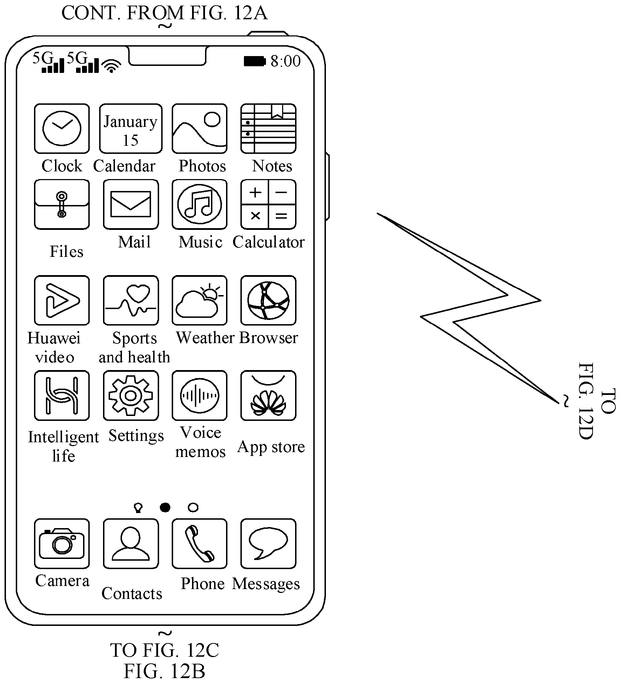

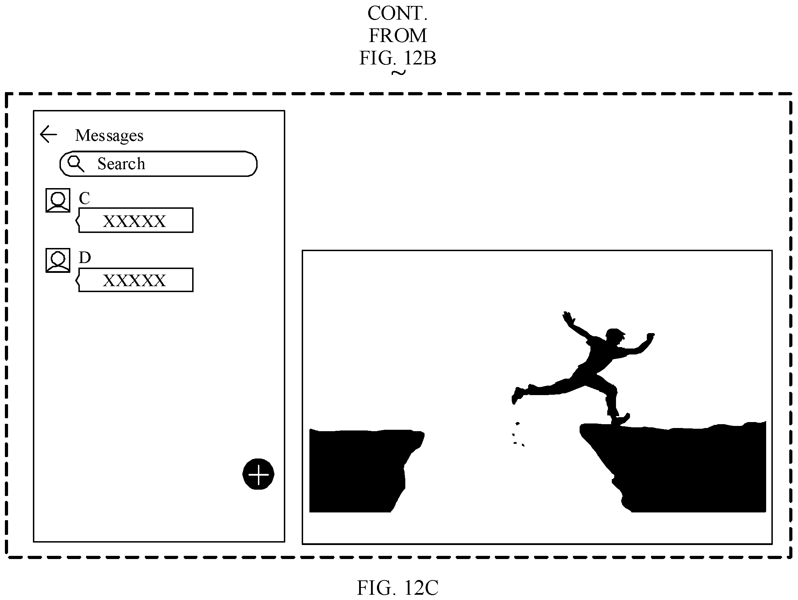

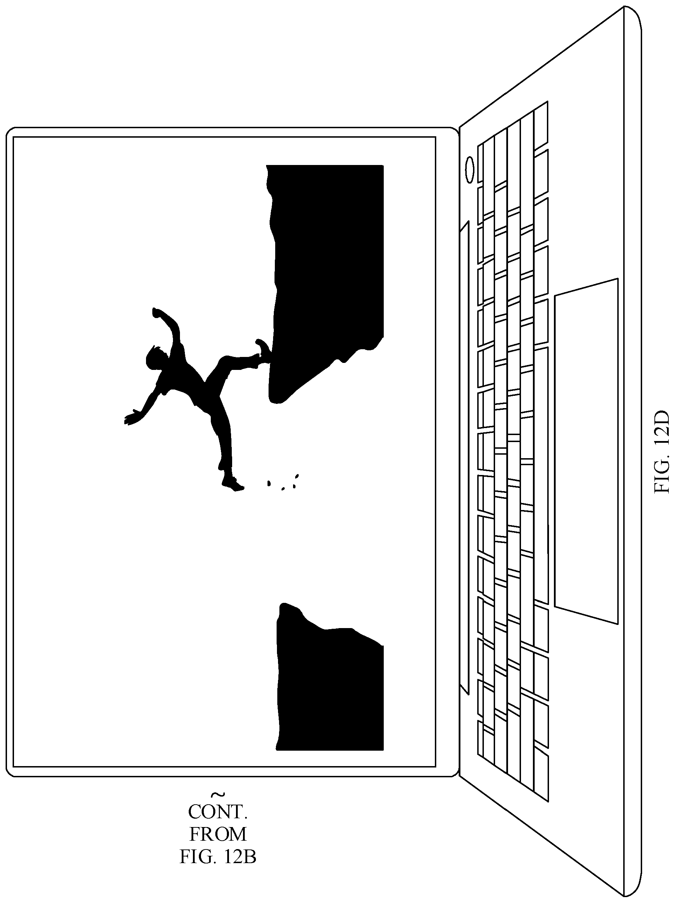

For example, it is assumed that the first device is the mobile phone, the second device is the notebook computer, and the first device projects onto the second device in the same-source projection manner. Refer to FIG. 12A, FIG. 12B, FIG. 12C, and FIG. 12D. When the first device receives the screen rotation request that is from the second device and determined based on the first operation shown in the operation 801 in FIG. 10A, FIG. 10B, FIG. 10C, and FIG. 10D, and the mobile phone determines that the corresponding application is the second-type application, the video application window is redetermined based on the size of the display of the notebook computer. Based on this solution, the mobile phone determines that the video application window covers the entire display area of the notebook computer. It should be noted that, in the solution of redetermining the window size of the first application based on the size of the display of the notebook computer, because the window of the first application is the focus window, the first application interface is displayed by using the window size adapted to the size of the display of the notebook computer. The non-focus window is still displayed on the display of the notebook computer, and is obscured by the focus window. For example, the notebook computer shown in FIG. 12A, FIG. 12B, FIG. 12C, and FIG. 12D displays the video application window (namely, the focus window), and a short message application window (namely, the non-focus window) and a mobile phone desktop window in full screen are obscured by the video application window. Therefore, the short message application window and the mobile phone desktop window in FIG. 12A, FIG. 12B, FIG. 12C, and FIG. 12D are invisible to the user.

In the solution of redetermining the window size of the first application based on the size of the display of the notebook computer, the notebook computer may respond to an operation of closing, minimizing, or zooming out the video application window by the user so that the short message application window and the mobile phone desktop window are visible to the user and the user can switch the focus window based on a requirement.

It may be understood that, generally, because display ratios of the first device (for example, the mobile phone) and the second device (for example, the notebook computer) are different, a ratio imbalance of the second-type application displayed in landscape display or portrait display on the first device (for example, the mobile phone) may be caused. For example, if the window size corresponding to the interface of the video-type application is redetermined based on the size of the display of the first device (for example, the mobile phone), when the video-type application is displayed on the display of the second device (for example, the notebook computer) in landscape display maximization, a problem that a thick frame is included around exists. The visual display effect is not as good as that of the same-source interface of the projection device (for example, the notebook computer). In the application interface display method in the multi-window projection scenario provided in this application, resizing may be performed on the size of the display of the second device by determining the application category and based on an actual feature and/or a requirement of the application, to improve the display effect of the application interface after projection and improve user experience.

That the first application is the video application is used as an example. If the size of the display of the second device (for example, the notebook computer) is not considered for resize, a thick frame (for example, a black border) usually appears on a left side and a right side of the video application window projected onto the notebook computer. However, by using the method corresponding to step S1102-2 shown in FIG. 11, the size of the display of the second device (for example, the notebook computer) is specifically considered when the video application is resized. As shown in FIG. 12A, FIG. 12B, FIG. 12C, and FIG. 12D, an effect of full-screen display of the video application interface on the second device (for example, the notebook computer) may be obtained. It is more suitable for a native video application interface on a notebook computer end, and is similar to an effect of directly opening a video on the second device (for example, the notebook computer), which provides good view for the user.

It should be noted that the projection effect shown in FIG. 12A, FIG. 12B, FIG. 12C, and FIG. 12D is an example in which the second-type application is the video application. A specific second application category is not limited in this application. For example, for an interface of a picture application, resizing may also be performed by using a method similar to that shown in step S1102-1.

In addition, it should be noted that the video application in this application is not limited to a video playback application, or may be an application that includes video content, for example, a news application or a social application. A specific application is not limited in this application.

It should be noted that in this application, an example in which the second device is the notebook computer is used for related descriptions in FIG. 1A and FIG. 1B, FIG. 8(a), FIG. 8(b), FIG. 10A, FIG. 10B, FIG. 10C, and FIG. 10D, and FIG. 12A, FIG. 12B, FIG. 12C, and FIG. 12D. Because the notebook computer has a feature that a window does not change with rotation of the display, for the second device whose window does not change with rotation of the display, the application window projected onto the second device does not change with rotation of the display of the second device.

However, for the second device whose window changes with rotation of the display, for example, the tablet computer, the application window after projection changes with rotation of the display of the second device, for example, switching from landscape display to portrait display or from portrait display to landscape display.

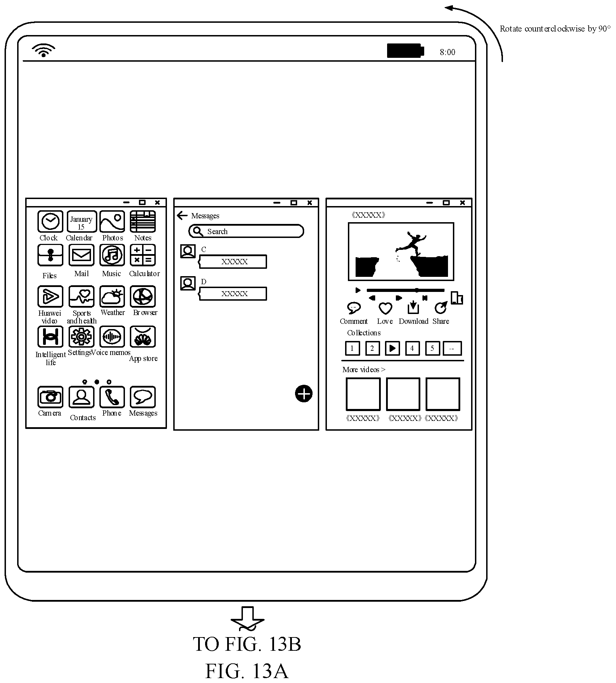

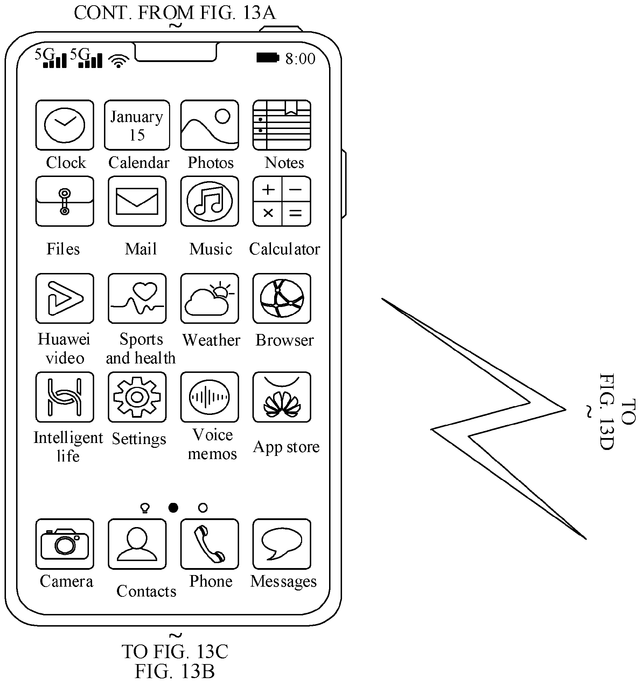

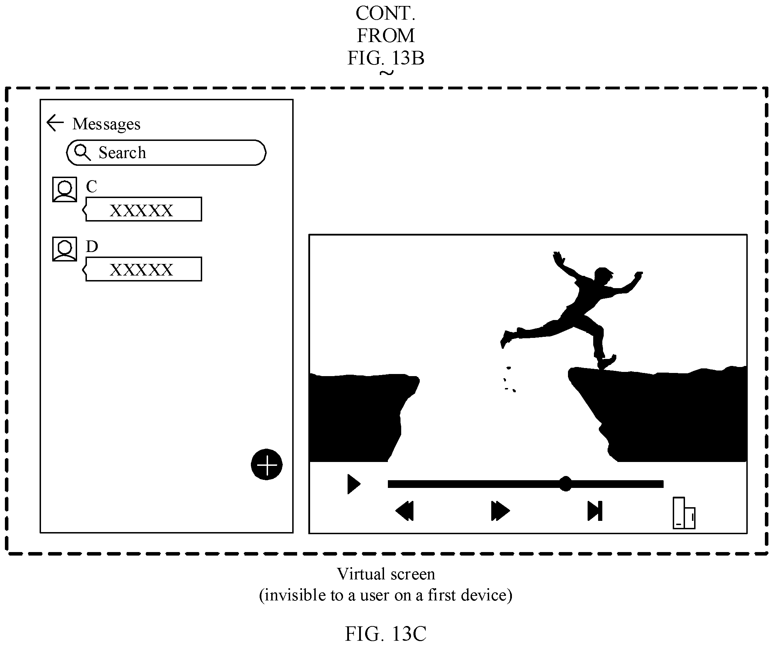

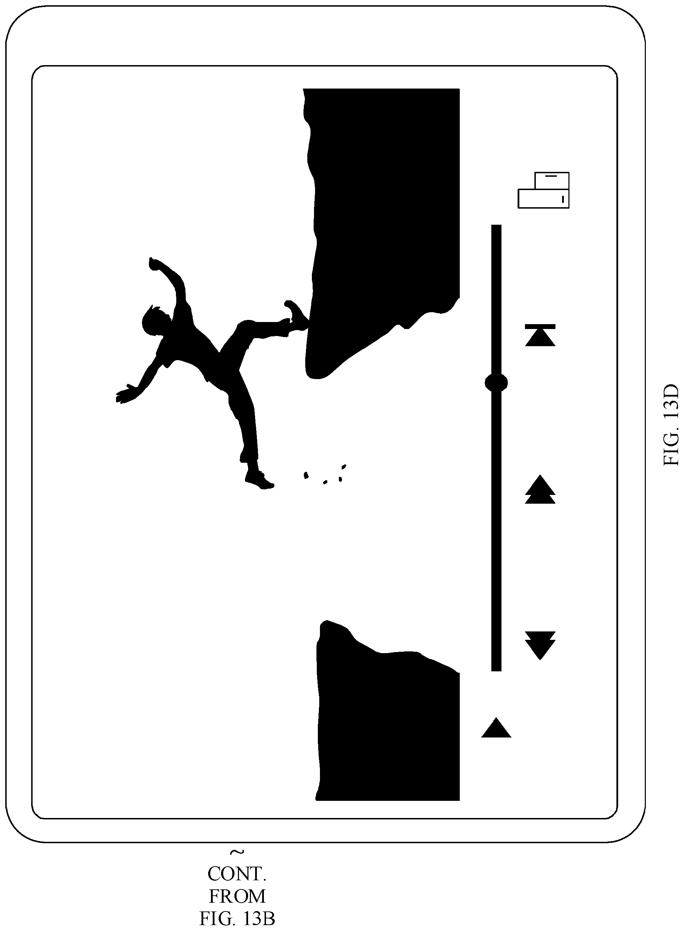

FIG. 13A, FIG. 13B, FIG. 13C, and FIG. 13D are a diagram of an example of application interface display effect in another projection scenario according to an embodiment of this application by using an example in which the first device is the mobile phone, the second device is the tablet computer, the first device projects the mobile phone desktop, the short message application interface, and the video application interface onto the second device, and the first operation is to rotate the tablet computer from a portrait state to a landscape state.

For example, it is assumed that the first device projects onto the second device in the same-source projection manner, where the default interface (not shown in FIG. 13A, FIG. 13B, FIG. 13C, and FIG. 13D) is displayed on the mobile phone, and the mobile phone desktop window, the video application window, and the short message application window are displayed on the tablet computer. The video application window is the current active window (namely, the focus window). Refer to FIG. 13A, FIG. 13B, FIG. 13C, and FIG. 13D. When the first device (namely, the mobile phone) receives the screen rotation request that is from the second device (namely, the tablet computer) and determined by an operation (for example, an operation of rotating the tablet computer by 90 degrees counterclockwise shown in FIG. 13A, FIG. 13B, FIG. 13C, and FIG. 13D) of rotating the tablet computer screen by the user detected based on the sensor drive (for example, the gyro sensor or the acceleration sensor), the tablet computer sends the screen rotation request corresponding to the screen rotation operation to the mobile phone by using communication connection to the mobile phone. For example, operating systems of the mobile phone and the notebook computer are the Android system with the layered architecture. The tablet computer may send the screen rotation request to the projection management module (for example, Assistant or Manager) of the mobile phone by using the projection management module (for example, Assistant or Manager). The projection management module of the mobile phone distributes the screen rotation request to a corresponding application (namely, the video application). After capturing (for example, hook) the screen rotation request from the video application and determining that the application is the second-type application, the AMS responds to the screen rotation request, and redetermines, based on the size of the display of the tablet computer, the window size corresponding to the video application interface. As shown in FIG. 13A, FIG. 13B, FIG. 13C, and FIG. 13D, the tablet computer displays the video application window in full screen, and the short message application window and the mobile phone desktop window are displayed on the tablet computer at the same time as the video application window (the short message application window and the mobile phone desktop window are obscured by the video application window, and therefore, the short message application window and the mobile phone desktop window in FIG. 13A, FIG. 13B, FIG. 13C, and FIG. 13D are invisible to the user).

In the example diagram shown in FIG. 13A, FIG. 13B, FIG. 13C, and FIG. 13D, the mobile phone (namely, the first device) is based on Case 3 (namely, the window size of the first application (namely, the video application) is redetermined based on the size of the display of the second device (namely, the tablet computer). In some embodiments, the mobile phone may be further based on Case 1 or Case 2 (namely, the window size of the first application (namely, the mobile phone) is redetermined based on the size of the display of the first device (namely, the mobile phone).

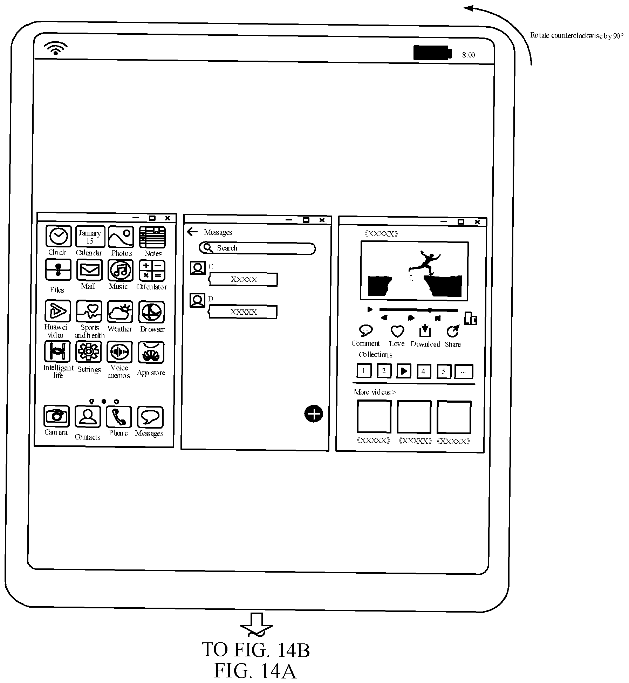

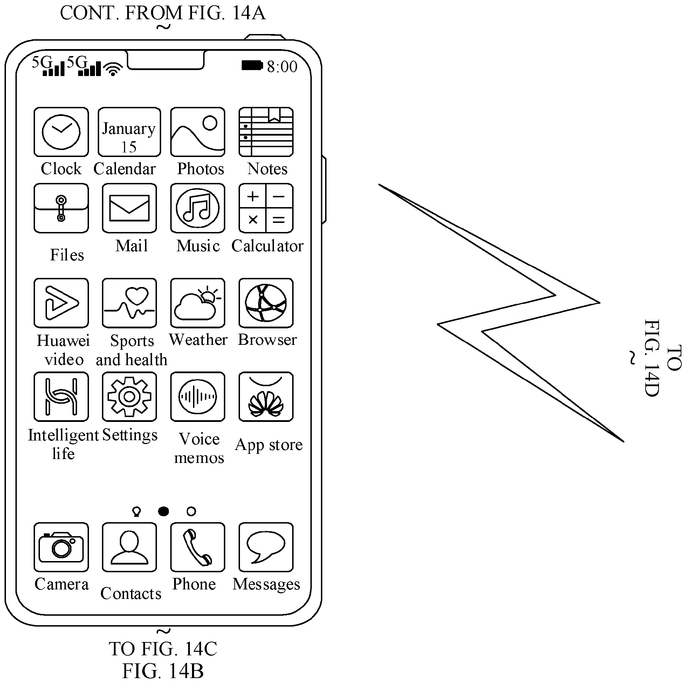

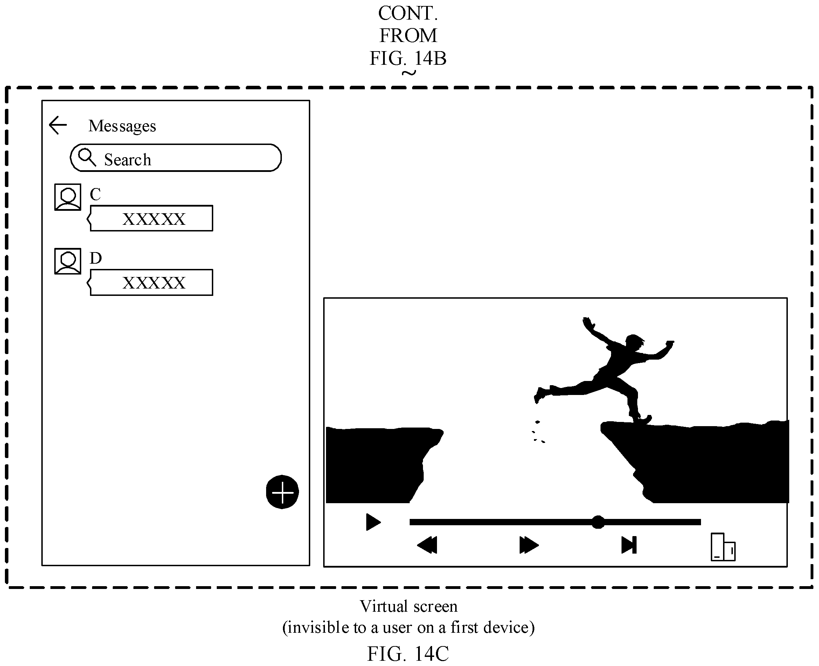

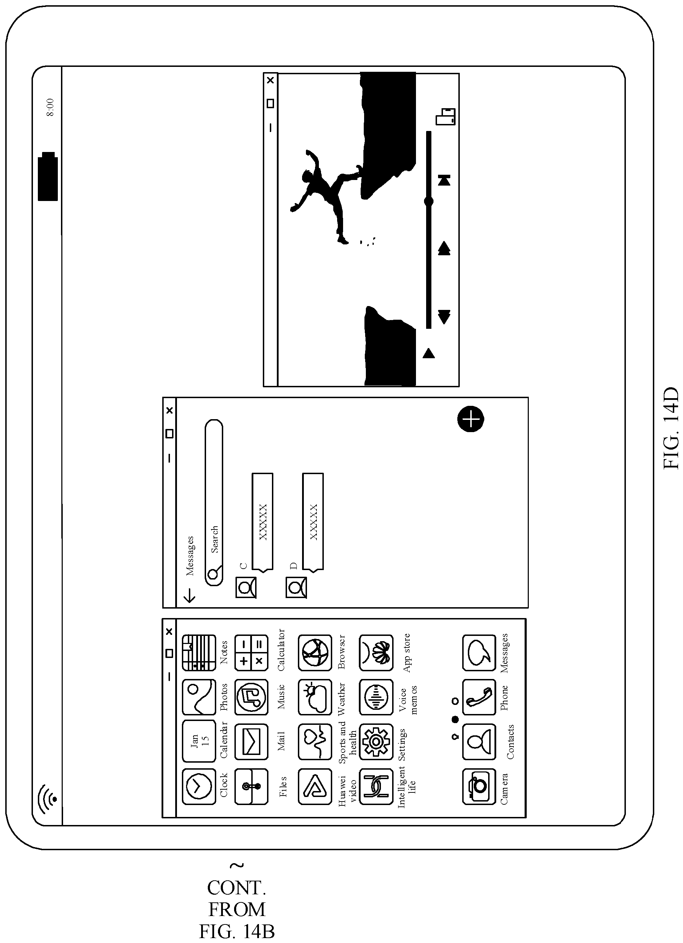

For example, it is assumed that the first device projects onto the second device in the different-source projection manner, where the default interface (not shown in FIG. 14A, FIG. 14B, FIG. 14C, and FIG. 14D) is displayed on the mobile phone, and the video application window and the short message application window are displayed on the tablet computer. The video application window is the current active window (namely, the focus window). As shown in FIG. 14A, FIG. 14B, FIG. 14C, and FIG. 14D, when the first device (namely, the mobile phone) receives the screen rotation request that is from the second device (namely, the tablet computer) and determined by an operation (for example, an operation of rotating the tablet computer by 90 degrees counterclockwise shown in FIG. 14A, FIG. 14B, FIG. 14C, and FIG. 14D) of rotating the tablet computer screen by the user detected based on the sensor drive (for example, the gyro sensor or the acceleration sensor), the tablet computer sends the screen rotation request corresponding to the screen rotation operation to the mobile phone by using communication connection to the mobile phone. For example, operating systems of the mobile phone and the notebook computer are the Android system with the layered architecture. The tablet computer may send the screen rotation request to the projection management module (for example, Assistant or Manager) of the mobile phone by using the projection management module (for example, Assistant or Manager). The projection management module of the mobile phone distributes the screen rotation request to the corresponding application (namely, the video application). After capturing (for example, hook) the screen rotation request from the video application, the AMS responds to the screen rotation request. As shown in FIG. 14A, FIG. 14B, FIG. 14C, and FIG. 14D, the tablet computer displays the video application window in a landscape state adapted to the size of the mobile phone, and the short message application window is displayed on the tablet computer at the same time as the video application window.

It should be noted that FIG. 8(a), FIG. 8(b), FIG. 10A, FIG. 10B, FIG. 10C, and FIG. 10D, FIG. 12A, FIG. 12B, FIG. 12C, and FIG. 12D, FIG. 13A, FIG. 13B, FIG. 13C, and FIG. 13D, and FIG. 14A, FIG. 14B, FIG. 14C, and FIG. 14D in this application are described by using an example in which the first application interface is the native application interface. In some embodiments, the first application interface may alternatively be a pop-up application interface. The native application interface may be understood as that in a process in which the user initiates the screen rotation request, core content of the application interface does not change, and only landscape/portrait orientation switching of the application interface is performed. The pop-up application interface may be understood as an application interface at a lower layer of the current application interface. For example, the current application interface is a video application home page, and the pop-up application interface may be a video interface. For another example, the current application interface is a WeChat^{®} chat interface, and the pop-up application interface may be a WeChat^{®} public account interface or the like.

For example, it is assumed that the current projection interface is the video application home page displayed in portrait display. In response to an operation of the user tapping the video A on the video application home page displayed on the second device through projection, the second device sends the pop-up request to the first device by using communication connection to the first device. For example, operating systems of the first device and the second device are the Android system with the layered architecture. The second device may send the pop-up request to the projection management module (for example, Assistant or Manager) of the first device by using the projection management module (for example, Assistant or Manager). The projection management module of the first device distributes the pop-up request to the corresponding application (namely, the video application). After capturing (for example, hook) the pop-up request from the video application, the AMS responds to the pop-up request, renders a video A interface on the virtual display in a landscape display state, and projects onto the second device.

It should be noted that in the application interface display method in the multi-window projection scenario provided in this embodiment of this application, when the first device updates the interface configuration parameter of the first application based on the redetermined window size of the first application, the first device redetermines a relative position relationship between the first application interface and the another twin application interface when the first application interface is jointly rendered on the virtual display. For example, when the mobile phone shown in FIG. 10A, FIG. 10B, FIG. 10C, and FIG. 10D re-renders the video application interface and the short message application interface based on the received screen rotation request (which is determined based on the operation 801 received by the notebook computer) of the user, a width of the video application interface changes in comparison with a previous frame of rendered interface. For another example, when the mobile phone shown in FIG. 12A, FIG. 12B, FIG. 12C, and FIG. 12D re-renders the video application interface and the short message application interface based on the received screen rotation request (which is determined based on the operation 801 received by the notebook computer) of the user, the width of the video application interface also changes in comparison with the previous frame of rendered interface. For still another example, when the mobile phone shown in FIG. 13A, FIG. 13B, FIG. 13C, and FIG. 13D re-renders the video application interface and the short message application interface based on the received screen rotation request (which is determined based on the operation of rotating the screen received by the tablet computer) of the user, the width of the video application interface also changes in comparison with the previous frame of rendered interface. For yet another example, when the mobile phone shown in FIG. 14A, FIG. 14B, FIG. 14C, and FIG. 14D re-renders the video application interface and the short message application interface based on the received screen rotation request (which is determined based on the operation of rotating the screen received by the tablet computer) of the user, the width of the video application interface also changes in comparison with the previous frame of rendered interface.

In the example diagrams shown in FIG. 10A, FIG. 10B, FIG. 10C, and FIG. 10D, FIG. 12A, FIG. 12B, FIG. 12C, and FIG. 12D, FIG. 13A, FIG. 13B, FIG. 13C, and FIG. 13D, and FIG. 14A, FIG. 14B, FIG. 14C, and FIG. 14D in this application, the video application window is projected onto a rightmost part of the second device as an example. For a case in which the video application window is projected onto another position (for example, a leftmost or a middle position) of the second device, when updating the interface configuration parameter of the first application based on the redetermined window size of the first application, the first device also redetermines the relative location relationship between the first application interface and the another twin application interface when the first application interface is jointly rendered on the virtual display.

However, based on the foregoing solution, when the application interface on the left is switched from portrait display to landscape display, all application interfaces on the right are shifted to the right. When the application interface on the left is switched from landscape display to portrait display, all application interfaces on the right are shifted to the left. The foregoing shift usually causes a screen flicker problem on the second device side in a projection process. For example, the projection interface blinks or blinks irregularly.

To resolve the foregoing screen flicker problem, in some embodiments, when the first device jointly renders the projection interface on the virtual display, the first device may reserve a preset distance margin d between different application interfaces. For example, the distance margin d≥b1, where b 1 is the length of the display of the first device. For another example, d≥b2, where b2 is the length of the display of the second device.

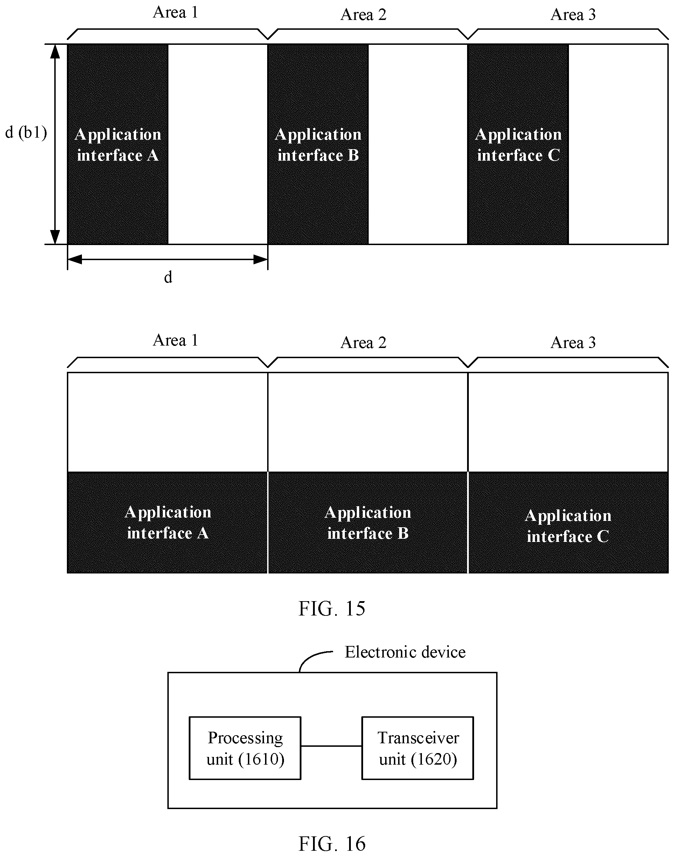

FIG. 15 is a schematic diagram in which the first device renders the projection interface on the virtual display by using an example in which a preset distance margin d is equal to b 1 is reserved between different application interfaces. As shown in FIG. 15, the virtual display is evenly divided into three areas. An area 1 is used to render an application interface A, an area 2 is used to render an application interface B, and an area 3 is used to render an application interface C. As shown in FIG. 15, when the application interface A, the application interface B, and the application interface C are rendered based on division of the areas shown in FIG. 15, portrait display or landscape display of any application interface does not cause shift of the virtual display during rendering of another application interface. Based on this solution, the screen flicker problem caused by application interface shift can be effectively resolved.

It should be understood that the solutions in embodiments of this application may be properly combined for use, and explanations or descriptions of terms in embodiments may be cross-referenced or explained in embodiments, which is not limited.

It should be understood that the ranking of sequence numbers of the foregoing processes does not mean the ordering of execution sequences in embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the terminal device includes a corresponding hardware structure and/or software module for performing each function. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In this embodiment of this application, the electronic devices (including the first device and the second device) may be divided into functional modules. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and there may be other division in an actual implementation.

For example, when each functional module is obtained through division in an integrated manner, FIG. 16 is a structural block diagram of the electronic device according to an embodiment of this application. For example, the electronic device may be the first device or the second device. As shown in FIG. 16, the electronic device may include a processing unit 1610 and a transceiver unit 1620.

When the electronic device is the first device, the processing unit 1610 is configured to receive the screen rotation request used to initiate landscape/portrait orientation switching of the window of the first application, and update the interface configuration parameter of the first application based on the received screen rotation request when determining that the first application supports window adjustment. For example, the processing unit 1610 is configured to support the electronic device in performing the foregoing steps S701, S702, S703, S704, S901, S902-1, S902-2, S903, S904, S905, and S1101, S1102-1 or S1102-2, and/or another process used in the technology described in this specification. The transceiver unit 1620 is configured to send the first information including the interface configuration parameter of the first application to the second device. The first information is used to perform landscape/portrait orientation switching on the window of the first application of the second device. For example, the transceiver unit 1620 is configured to support the electronic device in performing the foregoing step S705, and/or another process of the technology described in this specification.

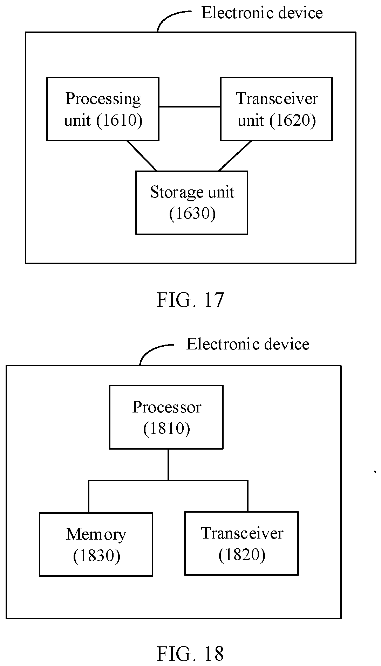

In a possible structure, as shown in FIG. 17, the electronic device may further include a storage unit 1630. The storage unit 1630 is configured to store a computer program, and implement processing data and/or processing results in the method provided in the embodiments of this application.

It should be noted that the transceiver unit 1620 may include a radio frequency circuit. Specifically, the portable device may receive and send wireless signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with the another device through wireless communication. The wireless communication may use any communication standard or protocol, including but not limited to the global system for mobile communications, the general packet radio service, the code division multiple access, the wideband code division multiple access, the long term evolution, the email, the short message service, and the like.

It should be further understood that each module in the electronic device may be implemented in a form of software and/or hardware, which is not specifically limited herein. In other words, the electronic device is presented in a form of the functional module. The "module" herein may be an application-specific integrated circuit ASIC, a circuit, a processor that executes one or more software or firmware programs and a memory, an integrated logic circuit, and/or another component that can provide the foregoing functions. Optionally, in a simple embodiment, a person skilled in the art may figure out that the portable device may be in a form shown in FIG. 18. The processing unit 1610 may be implemented by using the processor 1810 shown in FIG. 18. The transceiver unit 1620 may be implemented by using the transceiver 1820 shown in FIG. 18. Specifically, the processor is implemented by executing the computer program stored in the memory. Optionally, the memory is a storage unit in the chip, for example, a register or a cache. Alternatively, the storage unit may be the storage unit that is in the computer device and that is located outside the chip, for example, the memory 1830 shown in FIG. 18.

In an optional manner, when software is configured for implementing data transmission, the data transmission may be completely or partially implemented in a form of a computer program product. The computer program product includes one or more computer instructions. When the computer program instructions are loaded and executed on the computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from the computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state disk (solid-state disk SSD)), or the like.

Method or algorithm steps described in combination with embodiments of this application may be implemented by hardware, or may be implemented by the processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, a storage medium is coupled to the processor so that the processor can read information from the storage medium and write information into the storage medium. Certainly, the storage medium may be a component of the processor. The processor and the storage medium may be disposed in an ASIC. In addition, the ASIC may be located in a detection apparatus. Certainly, the processor and the storage medium may alternatively exist in the detection apparatus as discrete components.

According to the foregoing descriptions of the embodiments, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement. In other words, an inner structure of an apparatus is divided into different functional modules to implement all or a part of the functions described above.

## Claims

1. An application interface display method in a multi-window projection scenario, applied to a scenario in which a first device projects a screen onto a second device, wherein the method comprises:
receiving, by the first device, a screen rotation request, wherein the screen rotation request is used to initiate landscape/portrait orientation switching of a window of a first application, and the first application is projected by the first device onto the second device;
when determining that the first application supports window adjustment, updating, by the first device, an interface configuration parameter of the first application based on the screen rotation request; and
sending, by the first device, first information to the second device, wherein the first information comprises the interface configuration parameter of the first application, and the first information is used to perform landscape/portrait orientation switching on the window of the first application of the second device.

2. The method according to claim 1, wherein the receiving, by the first device, a screen rotation request of a user comprises:
receiving, by the first device, the screen rotation request of the user from the second device, wherein the screen rotation request is determined by the second device based on a first operation performed by the user on the second device.

3. The method according to claim 1, wherein the receiving, by the first device, a screen rotation request of a user comprises:
in response to reception of a second operation performed by the user on the first device, determining, by the first device, that the screen rotation request of the user is received.

4. The method according to any one of claims 1 to 3, wherein the updating, by the first device, an interface configuration parameter of the first application based on the screen rotation request comprises:
redetermining, by the first device, a window size of the first application based on the screen rotation request; and
updating, by the first device, the interface configuration parameter of the first application based on the redetermined window size of the first application.

5. The method according to claim 4, wherein the updating, by the first device, the interface configuration parameter of the first application based on the redetermined window size of the first application comprises:
if the screen rotation request is used to switch the window of the first application from portrait display to landscape display, adjusting, by the first device, the window size of the first application based on the screen rotation request so that a width of the window of the first application is greater than a height of the first application; or
if the screen rotation request is used to switch the window of the first application from landscape display to portrait display, adjusting, by the first device, the window size of the first application based on the screen rotation request so that a width of the window of the first application is less than a height of the first application.

6. The method according to claim 4 or 5, wherein the updating, by the first device, the interface configuration parameter of the first application based on the redetermined window size of the first application comprises:
obtaining, by the first device, first configuration information based on the redetermined window size of the first application, wherein the first configuration information is interface boundary information of the first application;
obtaining, by the first device, second configuration information based on the interface boundary information of the first application, wherein the second configuration information comprises one or more of the following: orientation of the first application, an icon displayed on a first application interface, a text displayed on the first application interface, a display position, size, and color of each icon displayed on the first application interface, and a display position, size, and color of each text displayed on the first application interface;
removing, by the first device, a process of the first application from screen configuration monitoring; and
updating, by the first device, the first configuration information and the second configuration information to the interface configuration parameter of the first application.

7. The method according to any one of claims 4 to 6, wherein the redetermining, by the first device, a window size of the first application based on the screen rotation request comprises:
redetermining, by the first device, the window size of the first application based on an application development attribute and/or application data configuration of the first application based on the screen rotation request; or
redetermining, by the first device, the window size of the first application based on an application development attribute and/or application data of the first application and a size of a display of the first device based on the screen rotation request; or
redetermining, by the first device, the window size of the first application based on an application development attribute and/or application data of the first application and a size of a display of the second device based on the screen rotation request.

8. The method according to any one of claims 4 to 7, wherein the method further comprises:
determining, by the first device, an application category of the first application; and
if the application category of the first application is a first-type application, redetermining, by the first device, the window size of the first application based on the size of the display of the second device based on the screen rotation request; or
if the application category of the first application is a second-type application, redetermining, by the first device, the window size of the first application based on the size of the display of the first device based on the screen rotation request.

9. The method according to claim 8, wherein the first-type application is a video-type application.

10. The method according to any one of claims 2 and 4 to 9, wherein
the first operation comprises any one of the following: rotating a screen, tapping a virtual button, a preset touch gesture, or a preset operation or a voice instruction for actual hardware.

11. An electronic device, wherein the electronic device comprises:
a memory, configured to store a computer program;
a transceiver, configured to receive or send a radio signal; and
a processor, configured to execute the computer program, so that the electronic device is enabled to perform the method according to any one of claims 1 to 10.

12. A computer-readable storage medium, wherein the computer-readable storage medium stores computer program code, and when the computer program code is executed by a processing circuit, the method according to any one of claims 1 to 10 is performed.

13. A chip system, wherein the chip system comprises a processing circuit and a storage medium, the storage medium stores computer program code, and when the computer program code is executed by the processing circuit, the method according to any one of claims 1 to 10 is performed.

14. A computer program product, wherein the computer program product is run on a computer, to perform the method according to any one of claims 1 to 10.
